# EUROPEAN PATENT SPECIFICATION

(11) **EP 2 184 463 B1**
(45) Date of publication and mention of the grant of the patent: **08.02.2012**
(21) Application number: 08829937.5
(22) Date of filing: 04.09.2008
(51) Int. Cl.: F02B 37/10, F02B 37/12, F02B 37/24, F02D 23/00, F02D 43/00, F02B 37/02

(54) **INTERNAL COMBUSTION ENGINE WITH TURBOCHARGER**
VERBRENNUNGSMOTOR MIT EINEM TURBOLADER
MOTEUR À COMBUSTION INTERNE ÉQUIPÉ D'UN TURBOCOMPRESSEUR

(30) Priority: 05.09.2007 JP 2007230572
(43) Date of publication of application: 12.05.2010
(73) Proprietor: Toyota Jidosha Kabushiki Kaisha, Toyota-shi, Aichi 471-8571 (JP)
(72) Inventor: KATO, Kichiro, Toyota-shi Aichi 471-8571 (JP); OHKI, Hisashi, Toyota-shi Aichi 471-8571 (JP)
(74) Representative: Intès, Didier Gérard André
(86) International application number: PCT/JP2008/066006
(87) International publication number: WO 2009/031629

(56) References cited:
- WO-A1-2005/068803
- DE-A1- 19 600 910
- DE-A1-102005 049 552
- DE-C1- 19 833 134
- JP-A- 2005 351 184
- JP-A- 2006 105 026
- JP-A- 2006 258 082
- JP-A- 2007 162 523

## Description

### TECHNICAL FIELD

This invention relates to an internal combustion engine with a turbocharger which is configured so as to supply a high pressure accumulated in a pressure accumulating container before a turbine wheel in the turbocharger for assisting a rotational drive of the turbine wheel in the turbocharger provided in an exhaust passage at accelerating.

### BACKGROUND ART

There is already known a supercharger mounted on an internal combustion engine for an output improvement of the internal combustion engine. Examples of the supercharger include a turbocharger in which a turbine wheel of a turbine is rotated by an exhaust gas and a compressor wheel of a compressor is rotated by rotation of the turbine wheel, providing supercharging air to the internal combustion engine.

In the turbocharger, however, a time lag occurs from a point where an accelerator pedal is depressed to a point where a supercharging effect of intake air is brought. Therefore, the turbocharger has a disadvantage that the response of the engine output is insufficient. An acceleration device of a turbocharger designed for overcoming the disadvantage is disclosed in Patent Document 1. The accelerator device of Patent Document 1 is provided with an air supply mechanism capable of supplying auxiliary air between an exhaust port and a turbine in accordance with an engine operating condition. The air supply mechanism is provided with a pump, a reservoir tank capable of accumulating and holding compressed air discharged from the pump, and a valve mechanism for supplying the compressed air in the reservoir tank to a passage between the exhaust port and the turbine. In addition, when the accelerator pedal is depressed in a low-speed rotational region of an engine rotation number to perform rapid acceleration of a vehicle, in a case where a temperature or a pressure of an exhaust gas is low, the valve mechanism is controlled in such a manner as to supply the compressed air in the reservoir tank to the exhaust passage.

On the other hand, for improving engine output torque over an entire region from a low speed to a high speed, practical use of an internal combustion engine equipped with a turbocharger having variable nozzle vanes arranged in an exhaust inlet of a turbine in the turbocharger (variable nozzle turbocharger) is in progress. Even in such a variable nozzle turbocharger, likewise an initial rise of the supercharge pressure is delayed at a moment of starting acceleration from a low load condition. That is, the above time lag occurs. Therefore, a quick initial rise of the supercharging pressure at such a moment is needed, and Patent Document 2 discloses a supercharge control device for an internal combustion engine designed for overcoming this issue, as an example. The device of Patent Document 2 is configured to be provided with acceleration requirement determining means for determining presence/absence of an acceleration requirement of a driver, assist means for supplying a positive pressure in an air tank accumulating the positive pressure generated by an air compressor to a turbine rotor to assist a drive of the turbine rotor, and control means for operating the assist means at the time the acceleration requirement determining means determines that the acceleration requirement of the driver is made.

Patent Document 1: Japanese Patent Laid-Open No. Sho 62-276221
Patent Document 2: Japanese Patent Laid-Open No. 2006-105026 Another internal combustion engine with turbocharger is known from DE 198 33 134.

### DISCLOSURE OF THE INVENTION

The device described in Patent Document 1 or the device described in Patent Document 2 is designed to supply gases to the turbine in the turbocharger when the acceleration requirement is made. However, since the supply timing of the gas is not determined, the rotation of the turbine wheel can not be appropriately assisted or the acceleration undesired for a driver is possibly generated in the internal combustion engine or in the vehicle depending on the supply timing. In addition, since there is a limit to an increase in size of a container in which a pressure is accumulated, from a viewpoint of downsizing the vehicle or the like, a pressure and a gas which are accumulated in the container and can be supplied to the turbine at a time are limited in amounts. Therefore, it is desired that the pressure supply from the container to the turbine wheel is made at timing when the best effect is achieved.

Therefore, the present invention is made in view of the foregoing issue and an object of the present invention is to appropriately enhance response of a turbocharger by effectively using a pressure accumulated in a container at the time an acceleration requirement is made.

For achieving the above object, an internal combustion engine with a turbocharger in the present invention comprises a turbocharger including a turbine having a turbine wheel provided in an exhaust passage, a control valve provided to be capable of supplying a pressure in a pressure accumulating container to the turbine wheel, and control-valve controlling means for controlling and opening the control valve to supply the pressure in the pressure accumulating container to the turbine wheel for assisting a rotational drive of the turbine wheel at accelerating, the internal combustion engine comprising:
acceleration requirement determining means for determining presence/absence of an acceleration requirement; and restricting means for controlling the control-valve controlling means in such a manner as to restrict an opening of the control valve to restrict the pressure supply from the pressure accumulating container to the turbine wheel from a point where it is determined by the acceleration requirement determining means that the acceleration requirement is made to a point where a predetermined time elapses.

Because of the provision of such a construction, in the internal combustion engine with the turbocharger according to the present invention, the opening of the control valve is restricted, thus restricting the pressure supply from the pressure accumulating container, from a point where it is determined by the acceleration requirement determining means that the acceleration requirement is made to a point where the predetermined time elapses. In consequence, after the predetermined time elapses from a point where the acceleration requirement is made, the pressure supply effective for the drive assist to the turbine wheel is carried out to the turbine wheel. Therefore, it is possible to appropriately enhance the response of the turbocharger by effectively using the pressure accumulated in the pressure accumulating container.

It is preferable that the turbocharger is further provided with variable nozzle vanes disposed in an exhaust inlet of the turbine and an angle control mechanism for controlling an angle of the variable nozzle vanes and the angle control mechanism controls the angle of the variable nozzle valves in a closing side when the acceleration requirement determining means determines that the acceleration requirement is made, and the restricting means controls the control-valve controlling means in such a manner as to restrict the opening of the control valve from a point where the acceleration requirement determining means determines that the acceleration requirement is made to a point where the angle control mechanism controls the angle of the variable nozzle vanes to a predetermined angle in the closing side. In this way, the pressure supply from the pressure accumulating container before the turbine wheel is restricted until the angle of the variable nozzle vanes is controlled to the predetermined angle in the closing side. This is capable of preventing the supplied pressure from escaping from between the plural variable nozzle vanes to a downstream side of them.

In addition, it is preferable that there is further provided an EGR device which includes an EGR valve disposed in an EGR passage communicating the exhaust passage with an intake passage and EGR-valve controlling means for controlling an opening of the EGR valve, and the EGR-valve controlling means controls the EGR valve in a valve-closing side when the acceleration requirement determining means determines that the acceleration requirement is made, and the restricting means controls the control-valve controlling means in such a manner as to restrict the opening of the control valve from a point where the acceleration requirement determining means determines that the acceleration requirement is made to a point where the EGR-valve controlling means controls the opening of the EGR valve to a predetermined opening in the valve-closing side. In this way, the pressure supply from the pressure accumulating container is restricted until the opening of the EGR valve is controlled to the predetermined opening in the valve-closing side and this is capable of preventing the supplied pressure from being leaked to an intake system through the EGR valve before the EGR valve is controlled to the predetermined opening and also enables the pressure to be appropriately led to the turbine wheel side.

In addition to them or instead of them, the restricting means is preferably provided with acceleration requirement level determining means for determining an acceleration requirement level and restriction level setting means for setting a restriction level of the pressure supply from the pressure accumulating container to the turbine wheel to be lower as the acceleration requirement level determined by the acceleration requirement level determining means is (becomes) higher. In this case, the restriction level of the pressure supply from the pressure accumulating container to the turbine wheel is set to be lower as the acceleration requirement level is (becomes) higher. Therefore, when the acceleration requirement level is high, it is possible to reduce the above-mentioned restriction of the pressure supply. In consequence, it is possible to perform an improvement of the response of the turbocharger in accordance with the acceleration requirement level.

More specially, said restriction level setting means can set shorter time as the predetermined time as the acceleration requirement level determined by said acceleration requirement level determining means is (becomes) higher. In this way, as the acceleration requirement level is (becomes) higher, it is possible to the more quickly supply a pressure for rotation drive assist to the turbine wheel.

In addition, the restriction level setting means preferably reduces a restriction amount of the opening of the control valve by the control valve controlling means to be smaller as the acceleration requirement level determined by the acceleration requirement level determining means is (becomes) higher. In this way, as the acceleration requirement level is (becomes) higher, it is possible to increase a pressure supply amount to the turbine wheel as much.

In addition, more specially, the internal combustion engine is mounted on a vehicle and connected through at least a transmission to a drive wheel where as a change gear ratio of the transmission is (becomes) higher, the acceleration requirement level is higher, and the internal combustion engine is provided with open speed detecting means of an accelerator opening for detecting or estimating an open speed of the accelerator opening. As the open speed of the accelerator opening detected or estimated by the open speed detecting means of the accelerator opening is (becomes) faster, the acceleration requirement level is higher. The acceleration requirement level can be appropriately determined based upon a change gear ratio of the transmission or an open speed of the accelerator opening.

More specially, an event that the restricting means controls the control-valve controlling means in such a manner as to restrict the opening of the control valve preferably includes an event that the valve opening control of the control valve by the control-valve controlling means is delayed. In this way, it is possible to completely restrict the pressure supply from the pressure accumulating container to the turbine wheel until the predetermined time elapses from a point where it is determined that the acceleration requirement is made

It is preferable that there are further provided an exhaust throttle valve disposed in the exhaust passage for the internal combustion engine and exhaust throttle valve controlling means for controlling and closing the exhaust throttle valve to perform pressure collection from an exhaust passage upstream of the exhaust throttle valve to the pressure accumulating container, wherein the pressure accumulating container is disposed to be capable of being communicated through a valve with the exhaust passage upstream of the exhaust throttle valve. In this case, it is possible to appropriately collect and supplement the pressure in the pressure accumulating container by using an exhaust gas in the internal combustion engine.

### BRIEF DESCRIPTION OF THE DRAWINGS

Fig. 1 is a concept diagram of a vehicle system to which a first embodiment is applied;
Fig. 2 is a control flow chart for pressure collection in the first embodiment;
Fig. 3 is a control flow chart for pressure release in the first embodiment;
Fig. 4 is a graph conceptually showing on the same time line a change in intake pressure, a change in VN opening, a change in EGR opening, and a change in flow amount control valve opening at the time of controlling the pressure release in the first embodiment;
Fig. 5A is a graph conceptually showing on the same time line a change in pressure in the pressure accumulating container and a change in intake pressure at the time of controlling pressure release in a second embodiment and a graph at the time of selecting a third-speed change gear range;
Fig. 5B is a graph conceptually showing on the same time line a change in pressure in the pressure accumulating container and a change in intake pressure at the time of controlling pressure release in the second embodiment and a graph at the time of selecting a fourth-speed change gear range;
Fig. 6A is a graph conceptually showing on the same time line a change in intake pressure and a change in accelerator pedal opening at the time of controlling pressure release in a third embodiment and a graph in a case where an accelerator pedal opening speed is faster than in a case of Fig. 6B; and
Fig. 6B is a graph conceptually showing on the same time line a change in intake pressure and a change in accelerator pedal opening at the time of controlling pressure release in the third embodiment.

### BEST MODE FOR CARRYING OUT THE INVENTION

Preferred embodiments of the present invention will be in detail explained with reference to the accompanying drawings.

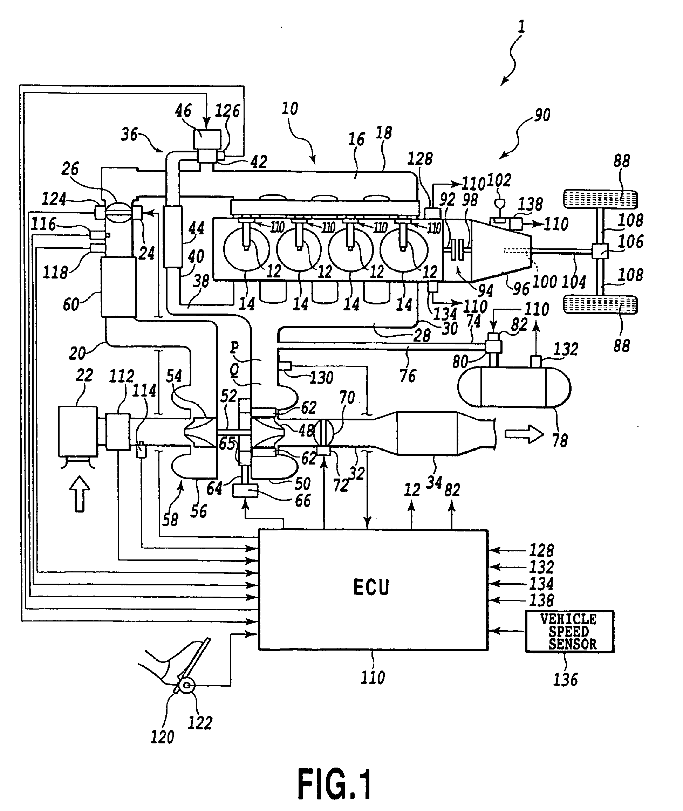

First, a first embodiment will be explained. Fig. 1 shows a schematic construction of a vehicle system 1 to which the first embodiment is applied. An internal combustion engine 10 is an internal combustion engine of a type which generates natural ignition by directly injecting light oil as fuel from a fuel injector 12 into a combustion chamber under compression, that is, a diesel engine.

An intake port which is exposed to a combustion chamber of a cylinder 14 and defines a part of an intake passage 16 is formed in a cylinder head and is opened/closed by an intake valve. An intake manifold 18 defining a part of the intake passage 16 is connected to the cylinder head, and at the further upstream side therefrom, an intake pipe 20 likewise defining a part of the intake passage 16 is connected. An air cleaner 22 is disposed at an upstream end side of the intake pipe 20 for eliminating dusts in air or the like introduced to the intake passage 16. In addition, a throttle valve 26 an opening of which is adjusted by a throttle actuator 24 is disposed in the midway of the intake passage 16.

On the other hand, an exhaust port which is exposed to the combustion chamber of the cylinder 14 and defines a part of an exhaust passage 28 is formed in the cylinder head and is opened/closed by an exhaust valve. An exhaust manifold 30 defining a part of the exhaust passage 28 is connected to the cylinder head, and at the further downstream side therefrom, an exhaust pipe 32 likewise defining a part of the exhaust passage 28 is connected. A catalyst converter 34 which is filled with exhaust gas purifying catalysts is disposed in the midway of the exhaust passage 28.

Further, there is provided an exhaust gas recirculation (EGR) device 36 for introducing a part of an exhaust gas flowing in the exhaust passage 28 to the intake passage 16. The EGR device 36 has an EGR pipe 40 defining an EGR passage 38 for connecting the exhaust passage 28 to the intake passage 16, an EGR valve 42 for adjusting a communicating state of the EGR passage 38, and an EGR cooler 44 for cooling the recirculated exhaust gas (EGR gas). Here, one end at the upstream side of the EGR pipe 40 is connected to the exhaust manifold 30 and the other end at the downstream side thereof is connected to the intake manifold 18. The EGR valve 42 is disposed downstream of the EGR cooler 44 and an opening of the EGR valve 42 is adjusted by an actuator 46. Here, the EGR valve 42 is a poppet type of valve. In addition, the actuator 46 is a vacuum type of actuator. This actuator 46 is a known actuator constructed with an atmospheric chamber capable of introducing an outside air, a vacuum chamber capable of introducing a vacuum from a vacuum source such as a vacuum tank, a vacuum introducing valve controlled for adjusting a vacuum introducing amount into the vacuum chamber, a diaphragm connected to a valve body or a valve shaft of the EGR valve 42 for air-tightly partitioning the above vacuum chamber or the above atmospheric chamber, and a spring for generating an urging force pressing the diaphragm from the vacuum chamber toward the atmospheric chamber. Therefore, the detailed explanation herein is omitted.

Further, a turbine 50 including a turbine wheel 48 which is disposed in the exhaust passage 28 to be rotated by the exhaust gas is disposed in the midway of the exhaust pipe 32. To correspond to the turbine 50, a compressor 56 including a compressor wheel 54 which is connected coaxially to the turbine wheel 48 through a rotational shaft 52 to be rotated by a rotational force of the turbine wheel 48 is disposed in the midway of the intake pipe 20. That is, a turbocharger 58 including the turbine 50 taking out exhaust energy and the compressor 56 for performing supercharging to the internal combustion engine 10 by the exhaust energy taken out by the turbine 50 is disposed in the internal combustion engine 10. In addition, an intercooler 60 is disposed downstream of the compressor 56 for cooling the air compressed by the compressor 56.

The turbocharger 58 is a variable nozzle turbocharger in which plural variable nozzle vanes (VN; vane) 62 are arranged in the turbine 50. That is, the plural vanes 62 are arranged in an exhaust inlet of the turbine 50 positioned around the turbine wheel 48 in such a manner as to surround the turbine wheel 48. A vane drive mechanism for driving the plural vanes 62is provided with a rod 64, a drive ring 65, an actuator 66 and the like. Angles of the plural vanes 62 are all together adjusted through the rod 64 and the drive ring 65 by the actuator 66. The angles of the plural vanes 62 are adjusted in a closing side in such a manner that an opening (VN opening) of a flow passage defined by the angles of the vanes 62 becomes in a closing side. In consequence, a pressure upstream of the plural vanes 62 becomes high, thus increasing a flow speed of the exhaust gas introduced into the turbine wheel 48. On the other hand, the angles of the plural vanes 62 are adjusted in an opening side in such a manner that the VN opening becomes in an opening side. In consequence, the pressure upstream of the plural vanes 62 becomes low, thus decreasing the flow speed of the exhaust gas introduced into the turbine wheel 48. That is, since the angles of the plural vanes 62 are variable (VN opening is variable), an effective area of the flow passage formed in the turbine 50 varies.

Here, the actuator 66 driving the rod 64 which is an operational shaft for driving the plural vanes 62 is constructed of a vacuum type actuator. When the rod 64 is driven by the actuator 66, the drive ring 65 is rotated around the rotational shaft 52 by a predetermined angle and the plural vanes 62 are moved based upon this rotation of the drive ring 65 in such a manner that all of them form the same angle uniformly. In addition, various mechanisms in regard to a link mechanism formed of respective members including the rod 64 and the drive ring 65 are known and an explanation thereof is herein omitted. In addition, the actuator 66 has the construction similar to that of the actuator 46 for driving the EGR valve 42 and is a known actuator constructed with an atmospheric chamber, a vacuum chamber capable of introducing a vacuum from a vacuum source, a vacuum introducing valve for adjusting a vacuum introducing amount into the vacuum chamber, a diaphragm connected to the rod 64 for air-tightly partitioning the above vacuum chamber or the above atmospheric chamber, and a spring for generating an urging force pressing the diaphragm from the vacuum chamber toward the atmospheric chamber. However, the vacuum source of the actuator 66 for angle adjustment of the vane 62 may be the same as the vacuum source of the actuator 46 for driving the EGR valve 42. In addition, the diaphragm is displaced in accordance with a pressure introduced into the vacuum chamber of the actuator 66. In addition, the rod 64 as an operational shaft can drive the plural vanes 62 all together in a two-way in accordance with the displacement.

Further, an exhaust throttle valve 70 is disposed in the midway of the exhaust passage 28. The exhaust throttle valve 70 herein is disposed in the exhaust passage downstream of the turbine 50 and upstream of the catalyst converter 34, but may be disposed in another portion of the exhaust passage 28. In the present first embodiment, the exhaust throttle valve 70 is a butterfly type valve and is driven by an actuator 72 as an electric motor. The exhaust throttle valve 70 serves as a cutoff valve which effectively blocks an exhaust gas flowing in the exhaust passage 28 at the valve closing time, that is, a fluid such as a combustion gas or air to substantially cut off the flow of such fluid toward a side downstream of the exhaust throttle valve 70. In addition, the exhaust throttle valve 70 may be a valve which is configured to reduce a flow passage cross sectional area of the exhaust passage 28 by approximately 50% at a valve closing time or a valve which is configured to completely close the exhaust passage 28 at a valve closing time.

A pipe passage 76 defined by a pipe member 74 is communicated with an exhaust passage (valve-to-valve passage) P between the exhaust valve and the exhaust throttle valve 70 in the exhaust passage 28, and the exhaust passage 28 is communicated with the pressure accumulating container 78 through the pipe passage 76. The pressure accumulating container 78 may be connected to any location in the valve-to-valve passage P, for example, a location defined by the exhaust manifold 30, but here, the pressure accumulating container 78 is connected to a location in the exhaust passage 28, which is positioned upstream of the exhaust throttle valve 70 and also upstream of the turbine 50. A diameter of the pipe passage 76 is smaller than that of the exhaust passage 28. A flow amount control valve 80 is provided in the pipe passage 76 for adjusting a communicating state between the pressure accumulating container 78 and the exhaust passage 28. In addition, the flow amount control valve 80 is opened to communicate the pressure accumulating container 78 with the exhaust passage 28 and on the other hand, the flow amount control valve 80 is closed to cut off the communication between the pressure accumulating container 78 and the exhaust passage 28, substantially sealing off the pressure accumulating container 78. However, the flow amount control valve 80 is driven by an actuator 82 formed of an electric motor. In addition, here, the flow amount control valve 80 is a poppet type of valve.

In addition, the pressure (pressure energy) in the exhaust passage 28, as described later, is collected through the pipe passage 76 from the exhaust passage 28 to the pressure accumulating container 78 with transfer of the exhaust gas. On the other hand, the pressure accumulated in the pressure accumulating container 78 is released through the pipe passage 76 from the pressure accumulating container 78 to the exhaust passage 28 for use. That is, in the present first embodiment, the pressure collection into the pressure accumulating container 78 and the pressure use therefrom are carried out through the same pipe passage 76.

In addition, here, the exhaust gas collected in the pressure accumulating container 78, that is, the pressure thereof is, at the time the acceleration requirement is made, particularly at an initial time of the acceleration, released through the pipe passage 76 to the exhaust passage 28. The released exhaust gas, that is, the pressure is used for rotating the turbine wheel 48 of the turbine 50 in the turbocharger 58. In consequence, an improvement on the response of the turbocharger 58 is performed.

On the other hand, a drive system 90 is provided between the internal combustion engine 10 as a power source and a drive wheel 88 for transmitting power generated in the internal combustion engine 10 to the drive wheel 88. A mixture formed by mixing fuel injected from each fuel injector 12 with air flowing from the intake passage 16 into the combustion chamber is self-ignited due to compression in the combustion chamber to be exploded and burned. The combustion gas at a high temperature and at a high pressure generated at this time reciprocates a piston to rotate a crank shaft 92, obtaining a drive force (output torque). An input shaft 98 of a manual transmission 96 is connected through a clutch 94 to the crank shaft 92 for the internal combustion engine 10. The clutch 94 is connected mechanically to a clutch pedal (not shown) as a clutch operational portion provided in a vehicle compartment and operates (is engaged or disengaged) in response to a depressing operation of the clutch pedal by a driver. When the clutch 94 is engaged, the output torque of the crank shaft 92 is transmitted through the clutch 94 to the input shaft 98, and when the clutch 94 is disengaged, transmission of the output torque from the crank shaft 92 to the input shaft 98 is blocked. Such a clutch 94 is regularly in an engagement state, but becomes in a disengagement state by a depressing operation of the clutch pedal.

The manual transmission 96 is provided with the aforementioned input shaft 98, and besides, an output shaft 100, plural gears (not shown) meshed with each other, a shift lever 102 operated by a driver, and a transmission mechanism (not shown) for transmitting the operation of the shift lever 102 to the gear. In the manual transmission 96, a combination of the gears (a gear position) to be meshed with is changed in response to the operation of the shift lever 102, thereby converting a rotation number (rotation speed), output torque, and the like for the internal combustion engine 10. With this conversion, a transmission ratio (change gear ratio) as a rotation speed ratio between the input shaft 98 and the output shaft 100 is made in accordance with the combination of the gears.

The output shaft 100 of the manual transmission 96 is connected through a drive shaft 104, a differential gear 106, an axle 108, and the like to the drive wheel 88, and rotation of the output shaft 100 is transmitted through the respective members 104, 106, and 108 to the drive wheel 88. Respective parts between the internal combustion engine 10 and the drive wheel 88 correspond to drive system parts, and the drive system (power transmission system) 90 of the vehicle system 1 is constructed of these parts.

The internal combustion engine 10 or the drive system 90 is provided with various sensors electrically outputting signals for finding (detecting or estimating) various values to an electronic control unit (ECU) 110. Here, some of them will be in detail described. An air flow meter 112 is provided in the intake pipe 20 for detecting an intake air quantity. An intake temperature sensor 114 is provided in the vicinity of the air flow meter 112 for detecting a temperature of intake air, and an intake temperature sensor 116 is provided also downstream of the intercooler 60 for detecting a temperature of the intake air. In addition, a pressure sensor 118 is provided in the midway of the intake pipe 20 for detecting an intake pressure, that is, a supercharging pressure. An accelerator opening sensor 122 is provided for detecting a position corresponding to a depressing amount of the accelerator pedal 120 operated by a driver, that is, an accelerator opening. In addition, a throttle position sensor 124 is provided for detecting an opening of the throttle valve 26. Further, 8 valve lift sensor 126 is provided for detecting an opening (EGR opening) of the EGR valve 42, here, for detecting the lift amount. In addition, a crank position sensor 128 is attached to a cylinder block (or in the vicinity) in which the piston reciprocates for detecting a crank rotational signal of the crank shaft 92 to which the piston is connected through a connecting rod. Here, the crank position sensor 128 is also used as an engine rotation number sensor for detecting an engine rotation number (engine rotation speed). Further, a pressure sensor 130 is provided for detecting a pressure of an exhaust gas in the valve-valve passage p, that is, a fluid such as a combustion gas or air. A pressure sensor 132 is also provided for detecting a pressure in the pressure accumulating container 78. Further, a temperature sensor 134 is provided for detecting a cooling water temperature of the internal combustion engine 10. Further, a vehicle speed sensor 136 is also provided for detecting a vehicle speed. In addition, a shift sensor (shift switch) 138 is provided in the shift lever 102 for detecting an operational position thereof. In addition, here, since the transmission is the manual transmission 96, the selected change gear range (or change gear ratio) in the manual transmission 96 is detected based upon an output signal from the shift switch 138. However, further, rotation speed sensors may be provided for detecting respective rotation speeds of the input shaft 98 and the output shaft 100, obtaining a change gear ratio of the transmission based upon the output signals of these rotation speed sensors.

An ECU 110 is constructed of a microcomputer including a CPU, a ROM, a RAM, an A/D converter, an input interface, an output interface and the like. The aforementioned various sensors are connected electrically to the input interface. The ECU 110 electrically outputs operational signals (drive signals) from the output interface in such a manner as to carry out a smooth driving or operation of the internal combustion engine 10 or the drive system 90 according preset programs based upon output signals (detection signals) of these various sensors. In this way, an operation of the fuel injector 12, each opening of the throttle valve 26, the EGR valve 42, the exhaust throttle valve 70, and the flow amount control valve 80, an angle of the vanes 62 and the like are controlled. However, the ECU 110 outputs operational signals to each actuator 24, 46, 72, 82 and 66 for controlling each opening of the throttle valve 26, the EGR valve 42, the exhaust throttle valve 70 and the flow amount control valve 80, and the angle of the vanes 62.

In addition, here, the flow amount control valve-controlling means is constructed in such a manner as to include the actuator 82 for driving the flow amount control valve 80 and a part of the ECU 110. The exhaust throttle valve-controlling means is constructed in such a manner as to include the actuator 72 for driving the exhaust throttle valve 70 and a part of the ECU 110. The acceleration requirement determining means is constructed in such a manner as to include the accelerator opening sensor 122 and a part of the ECU 110. The angle control mechanism controlling an angle of the vane 62 is constructed in such a manner as to include the above vane drive mechanism and a part of the ECU 110. The EGR valve controlling means is constructed in such a manner as to include the actuator 46 for driving the EGR valve 42 and a part of the ECU 110. The restriction means is constructed in such a manner as to include a part of the ECU 110.

In the internal combustion engine 10, a fuel injection quantity (fuel quantity) and a fuel injection timing are regularly set based upon an engine operating condition represented by an engine load and an engine rotation number, such as an intake air quantity detected based upon an output signal from the air flow meter 112 and an engine rotation number detected based upon an output signal from the crank position sensor 128. In addition, an injection of fuel from the fuel injector 12 is performed based upon the fuel injection quantity and the fuel injection timing.

However, in the internal combustion engine 10, when the engine rotation number detected based upon the output signal from the crank position sensor 128 is greater or equal to a predetermined rotation number (fuel-cut rotation number) and the accelerator opening detected based upon the output signal from the accelerator opening sensor 122 is 0%, that is, the accelerator pedal 120 is not depressed, the fuel injection from the fuel injector 12 is set to stop (fuel cut). That is, the fuel cut is performed when the engine rotation number is in a predetermined rotation number region during the running of a vehicle and the accelerator opening is in a fully closed state. However, when such a fuel cut continues to be performed and the engine rotation number is reduced to another predetermined rotation number (fuel-cut recovery rotation number), the fuel injection is restarted. In addition, while the fuel cut is performed, in a case where the accelerator pedal 120 is depressed so that the accelerator opening is increased in the open side and exceeds 0%, the fuel injection is also restarted. In addition, while the fuel cut is performed, the engine rotation number corresponds approximately to that at decelerating.

In addition, in this way, the above program is in advance set so that the throttle valve 26 is controlled in the closing side at the time of the fuel cut state. However, at the time of collecting the pressure to be described later, the throttle valve 26 is forcibly controlled to be in an open state. However, the throttle valve 26 is controlled to be in a fully open state at a start time of the internal combustion engine 10 and on the other hand, the throttle valve 26 is controlled to be in a fully closed state at a stop time of the internal combustion engine 10. In a normal running time, the opening of the throttle valve 26 is controlled to be an appropriate opening in accordance with an engine state, a cooling water temperature and the like.

In addition, an opening of the EGR valve 42 is controlled based upon an engine operating condition of the internal combustion engine 10 defined based upon output signals of the various sensors. Here, data in advance defined by an experiment to be constructed in such a manner that as a region to which the engine operating condition belongs is in a higher load side, the EGR amount is the more reduced is stored in a memory device such as a ROM. However, the EGR valve 42 is also forcibly controlled to be closed regardless of the engine operating condition at the time of collecting the pressure to be described later. In addition, at a transient period where the accelerator pedal 120 is depressed to accelerate the internal combustion engine 10, that is, the vehicle, the EGR opening obtained based upon the engine operating condition is corrected so that the EGR valve 42 is closed once.

Further, the angle of the plural vanes 62, that is, the VN opening is controlled based upon the engine operating condition. Here, the VN opening is increased so that as the operating region to which the engine operating condition belongs is in a higher load and in a higher rotation side, the flow passage is the more widened as compared to when the engine operating condition is in a low load and in a low rotation side. However, at a transient period where the accelerator pedal 120 is depressed to accelerate the vehicle, the VN opening obtained based upon the engine operating condition is corrected so that the VN opening is closed once to increase a flow speed of the exhaust gas, increasing the rotation number (rotation speed) of the turbine wheel 48. Here, at the transient period where the vehicle is accelerated, the angle of the plural vanes 62 is controlled so that the VN opening is fully closed once. In addition, when the VN opening is fully closed, the flow passage defined by the plural vanes 62 is not completely closed, and is in a state where a few percentage area of the flow passage is opened to a flow passage area when the VN opening is opened at a maximum.

Incidentally, since the exhaust throttle valve 70 is controlled to be held in a fully open state at a normally running time, the exhaust gas flowing in the exhaust passage 28 is released through the catalyst converter 34 to an outside air. On the other hand, when a predetermined condition for the pressure collection is met, the exhaust throttle valve 70 is controlled to be in a closed state, thus approximately blocking the fluid flowing in the exhaust passage 28. In addition, the fluid blocked in this way is effectively used to perform the pressure collection (energy collection).

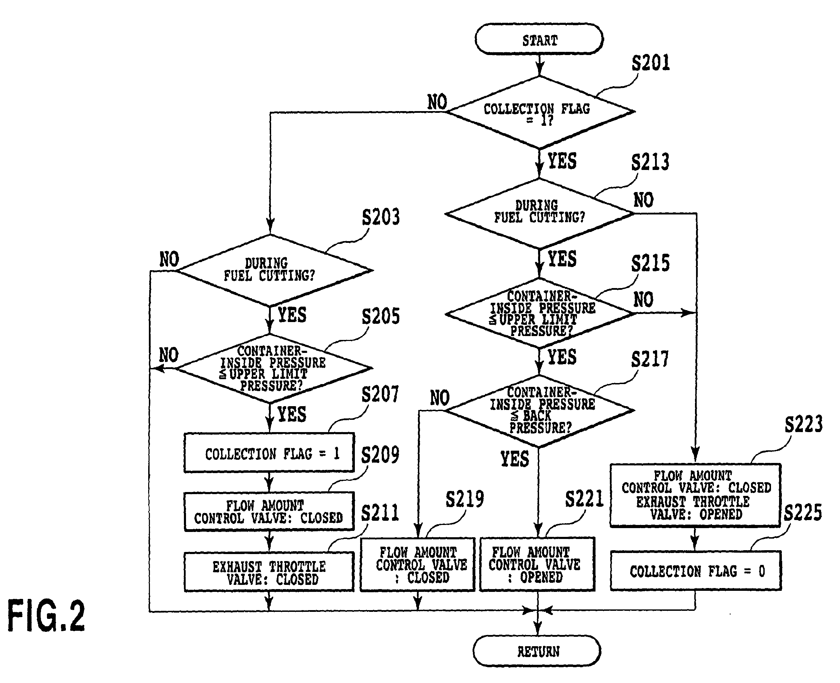

Hereinafter, the pressure collection will be in detail explained with reference to a flow chart in Fig. 2. However, the flow chart in Fig. 2 is repeated about every predetermined time, for example, every 20ms. In addition, as apparent from the following description, the exhaust gas collected in the pressure accumulating container 78 is approximately air.

However, the control to be hereinafter explained with reference to Fig. 2 is a specific example where when the exhaust throttle valve 70 in the exhaust passage 28 is controlled to be closed in fuel cutting to increase the pressure in the valve-valve passage P upstream of the exhaust throttle valve 70 to greater or equal to the pressure in the pressure accumulating container 78, the flow amount control valve 80 is controlled to be opened to collect the exhaust gas, that is, the pressure of the exhaust gas from the valve-valve passage P into the pressure accumulating container 78.

When the internal combustion engine 10 is activated, first, the ECU 110 determines at step S201 whether or not a collection flag is "1", that is, ON. Here, the event that the collection flag is "1" shows the satisfaction with a predetermined condition where the pressure collection is performed. On the other hand, the event that the collection flag is "0" shows that the predetermined condition where the pressure collection is performed is not met. Since the pressure collection flag is reset at an initial state, herein, the negative determination is made. In addition, in the present first embodiment, the event that the predetermined condition for pressure collection is met, as apparent from the following description, means that two conditions composed of a condition that the fuel cut is under way and a condition that the pressure in the pressure accumulating container 78 is less or equal to a predetermined pressure are met.

When at step S201 the negative determination is made, it is determined at next step S203 whether or not the fuel cut is under way. Here, more specifically the determination as to whether or not the fuel cut is under way is made based upon whether or not the fuel injection quantity is set as "0". However, the determination as to whether or not the fuel cut is under way may be made based upon whether or not the condition for performing the fuel cut as described above (fuel-cut performing condition) is met. Incidentally, for producing predetermined output from the internal combustion engine 10 as a whole in a normally running time, the fuel injection is carried out with a fuel injection quantity having more than "0" as described above. Therefore, at such a case, the negative determination is made at step S203, and the routine ends.

When the positive determination is made at step S203 on a basis of the event that the fuel cut is under way, at next step S205 it is determined whether or not the pressure in the pressure accumulating container 78 ("container-inside pressure" in Fig. 2) is a pressure allowable in the pressure accumulating container 78 and is also less or equal to an upper limit pressure which is in advance determined as a predetermined pressure and is stored in a memory device such as a ROM. This is because that when a sufficient amount of pressures, that is, the sufficient exhaust gas is accumulated in the pressure accumulating container 78, further pressure collection is prevented. The pressure in the pressure accumulating container 78 is detected based upon an output signal from the pressure sensor 132. In addition, when the negative determination is made at step S205, the routine ends. However, here, a value of 400kPa as a gauge pressure is set as the upper limit pressure, but another pressure value may be used.

When the positive determination is made at step S205, at next step S207 the collection flag is set as "1" by determining that the predetermined condition for pressure collection is met. In consequence, the control for pressure collection takes precedence over the normal control of the internal combustion engine 10. In addition, at step S209 an operational signal is outputted to the actuator 82 in such a manner that the flow amount control valve 80 is closed. Since the flow amount control valve 80 is basically closed, the flow amount control valve 80 is resultantly held in a closed state. At next step S211 an operational signal is outputted to the actuator 72 in such a manner that the exhaust throttle valve 70 is closed (exhaust throttle valve 70 is controlled to be closed). In this way, the routine ends.

In addition, when the collection flag is thus set as "1" (during a period where the collection flag is substantially "1" ), operational signals are outputted to the respective actuators 46 and 24 so that the EGR valve 42 is closed and the throttle valve 26 are opened. Therefore, the EGR valve 42 is in a fully closed state and the throttle valve 26 is in a fully open state. This is because the pressure in the valve-valve passage P is more appropriately increased for pressure collection. In addition, at this time, the EGR valve 42 can be driven to a closing side at a speed in accordance with the pressure in the valve-valve passage P.

At next step S201, the positive determination is made since the collection flag is "1". When the positive determination is made at step S201, at next step S213 it is determined whether or not the fuel cut is under way in the same way as at step S203. When herein, the positive determination is made, at next step S215 it is determined whether or not the pressure in the pressure accumulating container 78 is less or equal to the upper limit pressure in the same way as at step S205. In addition, the reason why the determination is made at each of step S213 and step S215 is that after the collection flag is set as "1" at step S207, when the predetermined condition for pressure collection does not become met, the control for completing the pressure collection is performed.

When the positive determination is made at step S215, at next step S217 it is determined whether or not the pressure in the pressure accumulating container 78 is less or equal to the pressure in the valve-valve passage P ("backpressure" in Fig. 2). Since the exhaust throttle valve 70 is already controlled to be closed at this time, the pressure (pressure energy) in the exhaust gas blocked by the exhaust throttle valve 70 is increased with time. In addition, the determination at step S217 is made for checking whether or not the pressure is already increased to the extent that it can be collected. In a case where the negative determination is made at step S217, at next step S219 an operational signal is outputted to the actuator 82 so that the flow amount control valve 80 is closed. This means that in a case where the flow amount control valve 80 is already closed, the flow amount control valve 80 is maintained as it is closed. On the other hand, in a case where the positive determination is made at step S217, at next step S221 an operational signal is outputted to the actuator 82 so that the flow amount control valve 80 is opened. Therefore, the increased pressure in the valve-valve passage P is collected in the pressure accumulating container 78 with the transfer of the exhaust gas through the pipe passage 76.

The exhaust gas (here, mainly air) having a high pressure, that is, high pressure energy is collected to increase the pressure in the pressure accumulating container 78. This pressure collection approximately continues to be performed unless the negative determination is made at step S213 or at step S215.

When the negative determination is made at step S213 or at step S215 during the pressure collecting, the control for completing the pressure collection is performed. When the negative determination is made at either of step S213 and step S215, at next step 223 an operational signal is outputted to the actuator 82 so that the flow amount control valve 80 is closed. Further, an operational signal is outputted to the actuator 72 so that the exhaust throttle valve 70 is opened. In addition, at next step S225 the collection flag is set as "0". As a result, the internal combustion engine 10 is retuned back to a normal control state where the pressure collection is not performed. In addition, the EGR valve 42 and the throttle valve 26 are to be controlled based upon an engine operating condition.

Incidentally, in a general turbocharger, when an engine rotation number is in a low rotational region, a flow amount of the exhaust gas is small and therefore, rotation of the turbocharger is low. In consequence, a time lag occurs from a point where the accelerator pedal 120 is depressed to a point where a supercharging effect of the intake air occurs. In addition, such a time lag likewise occurs in greater or lesser degrees even in the variable nozzle turbocharger 58 with the above construction. For example, when a vehicle runs in a low speed and an engine operating condition is in a low load region, the vehicle does not require so much engine output torque. Therefore, the plural vanes 62 are controlled to be in an open side to be held substantially in a non-supercharge state. When at this state, the accelerator pedal 120 is depressed by a driver and a changing amount per unit time of the accelerator opening, that is, an opening speed rapidly increases, first the plural vanes 62 are controlled to be driven in a closing side so that the pressure in the exhaust passage Q upstream of the turbine wheel 48 is increased. Next, the rotation number of the turbine wheel 48 (turbine rotation speed) and also the supercharging pressure increase, and thereafter, the fuel injection quantity is controlled in an increasing direction to increase the engine output torque. In this way, even in the variable nozzle turbocharger 58, the time lag occurs from a point where the accelerator pedal 120 is depressed to a point where the supercharging effect occurs. In particular, in the present first embodiment, since the vacuum type actuator 66 is used for driving the vane 62, if any measure is not taken, the time lag having a length which can not be ignored as much exists.

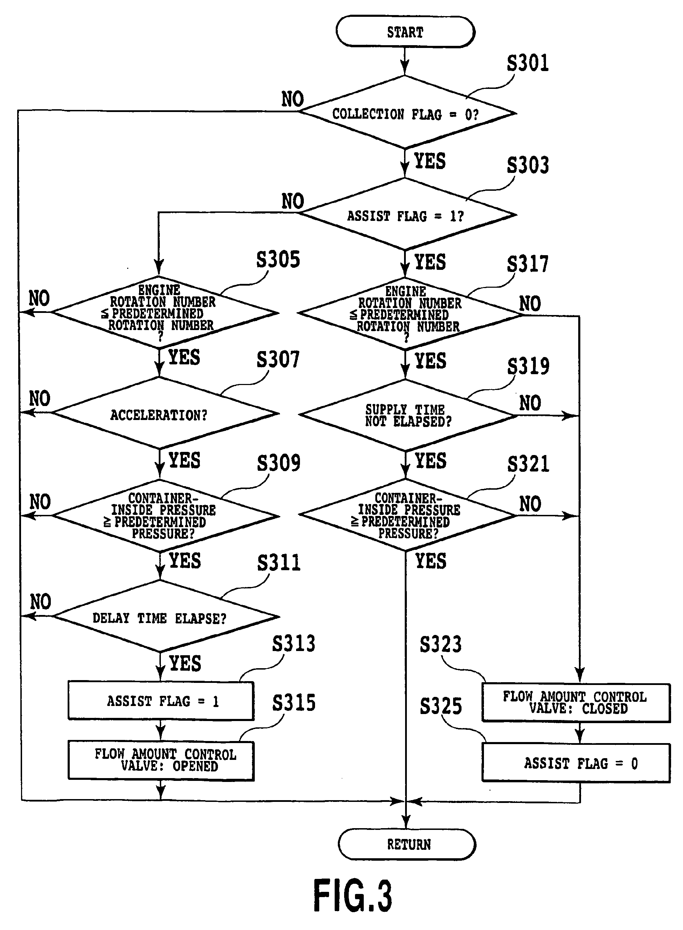

Therefore, for quickly increasing the supercharging pressure at a transient time where the accelerator pedal 120 is depressed to accelerate a vehicle, the pressure in the pressure accumulating container 78 is used. Use of the pressure collected in the pressure accumulating container 78 will be in detail explained with reference to a flow chart in Fig. 3. However, the flow chart in Fig. 3 is repeated about every predetermined time, for example, approximately every 20ms.

However, the control for pressure release to be hereinafter explained with reference to Fig. 3 is a specific example where, for increasing an increase rate of the turbine rotation number at the time an acceleration requirement is made, the pressure is supplied from the pressure accumulating container 78 toward the turbine wheel 48 of the turbine 50.

First, the ECU 110 determines at step S301 whether or not the collection flag is "0", that is, OFF. Since the collection flag is reset at an initial state, the positive determination is made herein. In addition, when the negative determination is made at step S301, the routine ends.

When the positive determination is made at step S301, at next step S303 it is determined whether or not an assist flag is "1", that is, ON. Here, the event that the assist flag is "1" means that it is necessary to assist an operation of the turbocharger 58, that is, a predetermined condition of the assist is met. On the other hand, the event that the assist flag is "0" means that it is not necessary to assist the operation of the turbocharger 58, that is, the predetermined condition of the assist is not met. Since the assist flag is reset at an initial state, the negative determination is made herein.

When the negative determination is made at step S303, at next step S305 it is determined whether or not an engine rotation number is less or equal to a predetermined rotation number. When the engine rotation number is higher than the predetermined number, since it is not necessary to assist the operation of the turbocharger 58, the negative determination is made at step S305 when the engine rotation number is more than the predetermined rotation number, and the routine ends. On the other hand, when the positive determination is made at step S305 by determining that the engine rotation number is less or equal to the predetermined rotation number, the process goes to step S307. For example, the predetermined rotation number is 3000rpm.

At step S307, it is determined whether or not acceleration, that is, an acceleration requirement is made. The determination on whether or not the acceleration is made corresponds to detection of an acceleration start timing and is made based upon an accelerator opening. When the accelerator opening is greater or equal to a predetermined value and changes in an increasing direction, and the changing amount per unit predetermined time, that is, the open speed (an open speed of the accelerator opening) exceeds a predetermined speed, the ECU 110 determines that the acceleration, that is, the acceleration requirement is made. More specially, the ECU 110 finds an accelerator opening based upon an output signal from the accelerator position sensor 122, and determines that the acceleration is made when the accelerator opening is, for example, greater or equal to 20% opening and an open speed of the accelerator opening exceeds the predetermined speed as a reference speed in advance stored in the memory device such as the ROM. When the positive determination is made at step S307, next the determination at step S309 is made. In addition, when the negative determination is made at step S307, the routine ends. In addition, when the positive determination is made by determining that the acceleration requirement is made, the process goes to step S309, but on the other hand, at this time, an operational signal is outputted to the actuator 46 so that the EGR valve 42 is closed. In addition, when it is determined that the acceleration requirement is made, the angle of the vane 62 is controlled to be closed at a maximum so that the VN opening is fully closed.

At step S309 it is determined whether or not the pressure in the pressure accumulating container 78 is greater or equal to a predetermined pressure. This predetermined pressure herein means a minimal pressure necessary for assisting the operation of the turbocharger 58, and is in advance found by experiments, which is stored in the ROM. More specially the predetermined pressure may be a gauge pressure of 200kPa. In addition, the predetermined pressure may be a value which is obtained by adding, for example, an extra pressure of 100kPa to the pressure in the exhaust passage Q. In addition, when the positive determination is made at step S309, the process goes to step S311. On the other hand, when the negative determination is made at step S309, the routine ends.

At step S311, it is determined whether or not a delay time elapses after it is determined at step S307 that the acceleration is made. This delay time is a predetermined time defined for being capable of more effectively using the pressure in the pressure accumulating container 78. Here, the delay time is in advance found and defined through an experiment taking into account a changing speed of the VN opening and a changing speed of the EGR opening.

This delay time is the time until the angle of the vanes 62 are controlled to a predetermined angle in a closing side in regard to the VN opening. More specially, a fully closed opening as a target opening of the VN opening when the acceleration requirement is made is found and set. In addition, an operational signal is outputted to the actuator 66 so that the VN opening becomes this opening. In this way, the angle of the vanes 62 is controlled to an angle corresponding to the target angle. The time until the angle of the vanes 62 reaches the predetermined angle of the vanes 62 corresponding to the target opening of the VN opening by taking into account a movement delay of the vane drive mechanism at this time is set as the delay time.

The way of setting the delay time is the same also in regard to the EGR opening. That is, the delay time is defined taking into account a movement delay of the actuator 46 substantially constituting the EGR valve drive mechanism, and is also the time until the opening of the EGR valve 42 is controlled to a target opening in a closing side.

In addition, the delay time may be set as needed in such a manner as to be an appropriate time at each time based upon a VN opening or an EGR opening when the acceleration requirement is made. In addition to it, since a closing speed of the vanes 62 can differ depending on a pressure (or pressure change) in the exhaust passage upstream of the turbine 50 or in the exhaust passage Q upstream of the turbine wheel 48, as the pressure is higher, the delay time may be found and set as longer time. However, here, the delay time is defined as a fixed value taking into account the movement delay or the like of the vane drive mechanism, the EGR valve drive mechanism or the like.

The determination at step S311 is made using this delay time. A determination object at step S311 is the elapse time after it is determined at step S307 that the acceleration is made and this time starts to be measured based upon the positive determination at step S307. Even if the positive determination is again made at step S307, if the measurement is already started, the measurement continues to be performed without being reset. For this measurement, the ECU 110 houses therein timer means having a time measuring function which can be reset. When the negative determination is made at step S311, the routine ends. On the other hand, when the positive determination is made at step S311, at next step S313 the assist flag is set as "1" by determining that a predetermined condition of the assist is met, and an operational signal is outputted to the actuator 82 so that the flow amount control valve 80 is opened at next step S315 (the flow amount control valve 80 is controlled to be opened). In this way, the operation assist of the turbocharger 58 is started.

When the acceleration requirement is thus made, an opening of the flow amount control valve 80 is restricted to "0" so that the operation assistance of the turbocharger 58 is restricted without being performed during the delay time set at step S311. In addition, the flow amount control valve 80 is controlled to be opened so that the operation assist is performed thereafter. Accordingly, here, the delay time is the time for delaying a start time of the operation assist of the turbocharger 58, and the open control of the flow amount control valve 80 is delayed until the delay time elapses.

In addition, since the collection flag is "0" and the assist flag is "1" at the routine after the above process, the positive determination is made at each of step S301 and at step S303. At next step S317 it is determined whether or not the engine rotation number is less or equal to a predetermined rotation number in the same as at step S305.

In addition, when the positive determination is made at step S317, at next step S319 it is determined whether or not the supply time elapses. Here, the time as a determination object is an elapse time after the flow amount control valve 80 is opened. Here, the ECU 110 measures an elapse time after a point where the process reaches step S313 by the housed timer means, and this measured time is adopted assuming it as an elapse time. In addition, the supply time as a determination reference is a predetermined time in advance found and set by an experiment, and here is not a variable, but a fixed value. The supply time is set as 0.5sec to 1.5sec, particularly preferably 1.0sec and is in advance stored in the memory device such as the ROM. However, the supply time used for the determination at step S319 may be varied and defined based upon an engine operating condition, a pressure in the exhaust passage Q upstream of the turbine wheel 48, or the like when the acceleration requirement is made.

When the positive determination is made by determining that the supply time does not elapse at step S319, at next step S321 it is determined whether or not the pressure in the pressure accumulating container 78 is greater or equal to the above predetermined pressure in the same way as at step S309. In addition, when the positive determination is here made, the routine ends.

By making the negative determination at either of step S317 to step S321, the control for ending the operation assist of the turbocharger 58 is performed. When the negative determination is made at either of step S317 to step S321, an operation signal is outputted to the actuator 82 so that the flow amount control valve 80 is closed at step S323. In addition, at next step S325 the assist flag is set as "0". In consequence, the routine ends.

However, after the operation assist of the turbocharger 58 is started once, the determination as to whether to complete the operation assist includes the determinations of step S317 to step S321 and besides, may include the determination as to whether or not the acceleration (requirement) continues to be made. This is because when the acceleration does not continue to be made, it is not necessary to perform the operation assist of the turbocharger 58 any more. More specially, when the accelerator opening changes from an accelerator opening at the time it is determined that the acceleration requirement is made to a closing side by a predetermined amount or when an open speed of the accelerator opening becomes negative and a magnitude thereof is greater or equal to a predetermined amount, the above control for completing the operation assist by determining that the acceleration does not continue to be made can be performed.

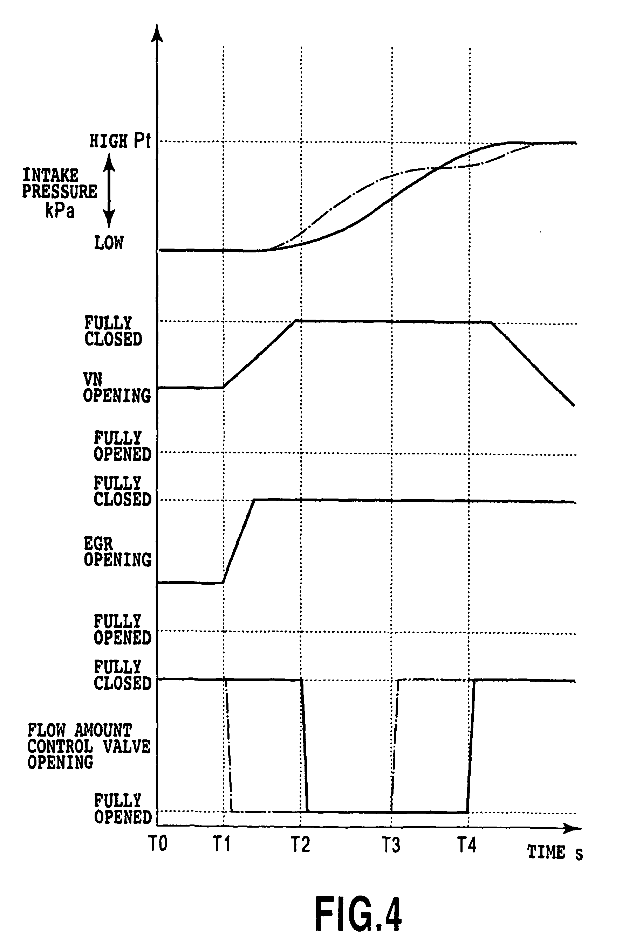

The effect of such a control will be explained with reference to Fig. 4. Fig. 4 conceptually shows the experiment result in a case of controlling angles of the plural vanes 62, that is, a VN opening, an EGR opening, and an opening of the flow amount control valve 80, based upon the above control in the first embodiment. Fig. 4 shows a change in intake pressure (supercharging pressure), a change in VN opening, a change in EGR opening, a change in opening of the flow amount control valve 80 in a solid line in a case of delaying a start time of an operation assist of the turbocharger 58 by an amount of the above delay time. Further, Fig. 4 conceptually shows changes of them in a chain line in a case where the start time is not delayed, overlapping over them.

At a point (TO) in the left end of the graph in Fig. 4, for example, a pressure of 400kPa which is a pressure capable of being used sufficiently is accumulated in the pressure accumulating container 78 and the internal combustion engine 10 operates in a state where the engine rotation number is in a low rotation (for example, 2000rpm or less) and the engine load is in a low load. When it is determined that the acceleration requirement is made at a point of T1 (positive determination at step S307), the angle of the vanes 62 is controlled to be closed so that the angle of the vanes 62 becomes an angle corresponding to the VN opening in a fully closed state, and the EGR valve 42 is controlled to be closed to be in a fully closed state. This is because when it is determined that the acceleration requirement is made, a rise in pressure in the exhaust passage Q is promoted for quickening a rise of an intake pressure, that is, a supercharging pressure. However, since the actuator 46 for driving the EGR valve 42 or the actuator 66 for adjusting the VN opening is, as described above, a vacuum type actuator, an opening thereof does not rapidly change, and it takes time for each of the VN opening and the EGR opening to reach each target opening. In addition, also in a case where each of the actuators 46 and 66 is an electric motor or the like, a specific time is required until the VN opening or the EGR opening reaches such an opening.

At the time it is determined that the acceleration requirement is made, as shown in a chain line in Fig. 4, when the flow amount control valve 80 is immediately controlled to be opened in a state where the VN opening or the EGR opening is still sufficiently opened, the intake pressure starts to rise in good response immediately after controlling the flow amount control valve 80 in an opening side. However, the rising speed slows down soon after that. Further, when the pressure supply from the pressure accumulating container 78 is completed at a point of T3, the intake pressure once remains as it is. As a result, the intake pressure does not reach smoothly a target supercharging pressure Pt defined based upon an engine operating condition, and reaches the target supercharging pressure Pt as if it is out of breath.

One of the reasons is that as a result of supplying the pressure before the VN opening or the EGR opening is sufficiently closed, all or a part of the pressure escapes to the exhaust passage downstream of the turbine 50 and or the intake passage, and all of the pressure is not effectively used for rotational drive of the turbine wheel 48. Further, this is because there is a limit to an exhaust gas amount, that is, a pressure amount accumulated in the pressure accumulating container 78, and there is a limit to a pressure usable in the pressure accumulating container 78. In this experiment, since the pressure in the pressure accumulating container 78 reaches a gauge pressure of 200kPa at a point of T3, the flow amount control valve 80 is controlled to be closed. In addition, the pressure in the pressure accumulating container having a gauge pressure of 200kPa is a pressure as much as not to require so much time for increasing the pressure in the pressure accumulating container 78 to a pressure as a gauge pressure of 400kPa through the next pressure collection, and is an example of a preferred lower limit pressure in light of efficiently repeating the pressure collection and the pressure use.

In contrast, at a point of T2, the VN opening and the EGR opening are in a fully closed state, and are sufficiently small. Therefore, here, time of T1 to T2 which is a period for the VN opening and the EGR opening both to be in a fully closed state is defined as the above delay time. In addition, the flow amount control valve 80 is controlled to be opened after an elapse of the delay time, and the flow amount control valve 80 is controlled to be maintained in an open state in the duration of a predetermined time of T2 to T4 to a point of T4. Here, the predetermined time of T2 to T4 is time required for the pressure in the pressure accumulating container 78 to be reduced to the gauge pressure of 200kPa, and may be also supply time at step S319. When the flow amount control valve 80 is controlled to be opened at a point of T2, the intake pressure, as shown in a solid line, rises in a delay substantially by an amount of the delay time, and thereafter, the intake pressure has smoothly reached the target supercharging pressure Pt. In addition, in this case, the time from a point of T1 where it was determined that the acceleration requirement was made to a point where the intake pressure reached the target supercharging pressure Pt was shorter as compared to a case where the flow amount control valve 80 was, as described above, controlled to be closed immediately at a point of T1. In addition, in this duration, the VN opening and the EGR opening both are maintained to be in a fully closed state. Thereafter, for maintaining the supercharging pressure to the target supercharging pressure Pt in accordance with the engine operating condition, the angle of the vanes 62 is controlled to an opening side. However, the EGR valve 42 is maintained to be in a closed state during accelerating.

From the above, it is apparent that by supplying the pressure in the pressure accumulating container 78 to the turbine wheel 48 after a predetermined time elapses when the acceleration requirement is made, the supercharging pressure can be quickly and smoothly increased to the target supercharging pressure Pt in good response.

As described above, according to the present first embodiment, when the acceleration requirement is made, until the EGR valve 42 is controlled to be closed to move the EGR opening to a predetermined opening in a closing side or when the acceleration requirement is made, until the angle of the vanes 62 is controlled in a closing side to be made to a predetermined angle in a closing side, the opening control of the flow amount control valve 80 is restricted. Thereafter, the flow amount control valve 80 is controlled to be opened. With this control, the limited pressure in the pressure accumulating container 78 is effectively used to quickly increase the turbine rotation number, making it possible to appropriately increase the supercharging pressure in good response.

In addition, in the above first embodiment, when the acceleration requirement is made, the opening control of the flow amount control valve 80 is delayed until the VN opening and the EGR opening are completely controlled to the target opening which are in a fully closed state. However, the flow amount control valve 80 may start to be opened before the VN opening or the EGR opening is completely made to the target opening. In addition, the time for restricting the opening control of the flow amount control valve at the time the acceleration requirement is made is the time required for the angle of the plural vanes 62 to be controlled to a predetermined angle in a closing side, and also the time until the EGR opening is controlled to a predetermined opening in a closing side. However, the predetermined angle of the vanes 62 is not necessarily an angle corresponding to the VN opening in a fully closed state and the predetermined opening of the EGR valve 42 is not necessarily an opening in a fully closed state. The predetermined angle or the predetermined opening may be an angle or an opening in which the pressure from the pressure accumulating container 78 is effectively used for rotation drive of the turbine wheel 48 for more appropriately increasing the supercharging pressure. For example, the predetermined angle of the plural vanes 62 is an angle corresponding to the VN opening which is closed by 80%, and the predetermined opening of the EGR valve 42 is an EGR opening which is closed by 80%.

Next, a second embodiment will be explained. The second embodiment differs from the first embodiment in a point that a turbocharger is not the variable nozzle turbocharger, but simply a turbocharger, and opening/closing time of the flow amount control valve 80 at the time of pressure use is set mainly based upon a change gear ratio of the manual transmission 96. However, in regard to points other than the above point, a vehicle system in which the second embodiment is mounted and a control thereof are approximately the same as those explained in the first embodiment. Therefore, hereinafter components in the second embodiment which are the same as or identical to those in the first embodiment are referred to as same codes, and a detailed explanation thereof is omitted. Points in regard to the pressure use in the second embodiment different from the pressure use in the first embodiment will be explained. However, the turbocharger in the present second embodiment is indicated by a code of 158.

First, a delay time (refer to step S311) in the second embodiment will be explained. According to the second embodiment, in an operation assist of the turbocharger 158 using a pressure in the pressure accumulating container 78, a delay time is set based upon a selected change gear range of the manual transmission 96 at each time of accelerating.

In general, a degree of the acceleration requirement by a driver (acceleration requirement level) can be defined in accordance with a change gear range, that is, a change gear ratio of the manual transmission 96 which has been selected when the accelerator pedal 120 is depressed. More specially, when an acceleration requirement level at the time a third-speed change gear range is selected is compared with that at the time a fourth-speed change gear range is selected, it can be determined that the acceleration requirement level at the time the third-speed change gear range is selected is higher. This is because as the change gear range of the manual transmission 96 is lower, that is, the change gear ratio is larger, a rising speed of the engine rotation number is faster and an increase of the vehicle speed can be obtained more quickly.

Therefore, in the second embodiment, since, as the change gear ratio of the manual transmission 96 at the time the acceleration requirement is made is higher, the acceleration requirement level is higher, shorter delay time is set in accordance with the high acceleration requirement level. Therefore, data defining a relation between each change gear range of the manual transmission 96 and the delay time are in advance defined by an experiment, which are stored in the memory device such as the ROM. More specially, time sa is defined as the delay time to a first-speed change gear range of the manual transmission 96. Likewise, times sb, sc, sd, and se are defined as the delay times to a second-speed, a third-speed, a fourth-speed, and a fifth-speed change gear ranges (sa < sb < sc < sd < se).

In addition, in the second embodiment, the supply time of the pressure in the pressure accumulating container 78 (refer to step S319) is also defined based upon the change gear range of the manual transmission 96. More specially, as a change gear range of the manual transmission 96 at the time the acceleration requirement is made is lower, that is, as a change gear ratio thereof is higher, shorter time is set as the supply time. This is because as the change gear ratio is higher, a rising speed of the engine rotation number is faster and a rise of a pressure in the exhaust passage Q is quicker. In the second embodiment, data in regard to the supply time are in advance defined by an experiment, which are stored in the memory device such as the ROM. The data are composed of data defining a relation between each change gear range of the manual transmission 96 and the supply time in the same way as the delay time as explained before.

When the acceleration requirement is made (positive determination at step S307 in Fig. 3), the ECU 110 reads in a change gear range of the manual transmission 96 selected as a gear ratio of the manual transmission 96 at this time. This corresponds to determining an acceleration requirement level. In addition, by searching for the above data based upon the change gear range, one of the times sa, sb, sc, sd, and se is set as the delay time. These delay times correspond to times for delaying the valve-opening control to the flow amount control valve 80, and the opening control of the flow amount control valve 80 is, as described above, restricted during this period. In consequence, as longer time is set as the delay time, higher restriction level is set. As apparent from the above, in the second embodiment, as the acceleration requirement level is higher, the restriction level of the pressure supply from the pressure accumulating container 78 is set lower to set shorter time as the delay time.

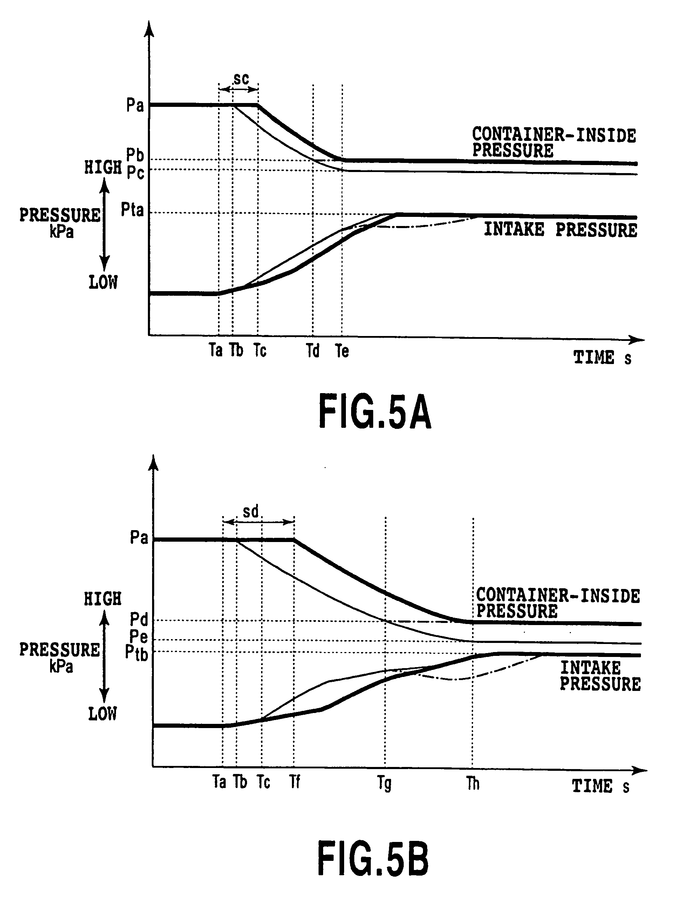

More specially, it will be explained with reference to Fig. 5A and Fig. 5B. Fig. 5A is a graph conceptually showing the experiment result in a case where a third-speed change gear range has been selected at the manual transmission 96 when the acceleration requirement is made. Fig. 5B is a graph conceptually showing the experiment result in a case where a fourth-speed change gear range has been selected at the manual transmission 96 when the acceleration requirement is made. In each of Figs. 5A and 5B, a group of upper curves shows a change in pressure in the pressure accumulating container 78 (container-inside pressure in each of Fig. 5A and 5B) and a group of lower curves shows a change in intake pressure, that is, supercharging pressure in the intake passage 16. At a point in the left end at each of Figs. 5A and 5B, a pressure Pa in the pressure accumulating container 78 has a gauge pressure of 400kPa, and the internal combustion engine 10 operates in a state where the engine rotation number is low (for example, 2000rpm or less) and the engine load is low.

First, they will be explained with reference to Fig. 5A. When it is determined at a point of Ta that the acceleration requirement is made, time sc corresponding to the third-speed change gear range is obtained and set as the delay time. The time sc corresponds to time Ta to Tc in Fig. 5A. In addition, after time sc elapses from a point where the acceleration requirement is made, the flow amount control valve 80 is controlled to be opened. The pressure in the pressure accumulating container 78 is, as shown in a heavy line in Fig. 5A, supplied to a point of Te to be reduced to a pressure Pb which is, for example, 250kPa. In this case, the time Tc to Te in which the pressure in the pressure accumulating container 78 reaches the pressure Pb is a supply time of the pressure to the third-speed change gear range. With this pressure supply, the intake pressure is smoothly increased to a target supercharging pressure Pta defined based upon an engine rotation condition.

On the other hand, in regard to a case where the flow amount control valve 80 is controlled to be opened at a point of Tb immediately after the acceleration requirement is made they are shown in a thin line in Fig. 5A. In this case, for smoothly increasing the intake pressure to the target supercharging pressure Pta, the pressure supply is required until the pressure in the pressure accumulating container 78 substantially reaches a pressure Pc (< Pb) at a point of Te, and an amount of pressures used for the operation assist of the turbocharger 58 becomes large. However, for the event that the pressure consumption amount becomes large, the time until the intake pressure reaches the target supercharging pressure Pta does not differ largely. From the above, as shown in a heavy line in Fig. 5A, it is found out that the pressure consumption amount is smaller and the intake pressure can be more appropriately increased to the target supercharging pressure Pta in a case where the flow amount control valve 80 is controlled to be opened to perform the operation assist after the optimal predetermined delay time sc elapses from a point where the acceleration requirement is made, as compared to a case where the flow amount control valve 80 is controlled to be opened at random immediately after the acceleration requirement is made to start the pressure supply.

Fig. 5A further shows them in a chain line in the event that the flow amount control valve 80 is controlled to be closed when the pressure in the pressure accumulating container 78 reaches the pressure Pb in a case where the flow amount control valve 80 is controlled to be opened at a point of Tb. In this case, since the pressure in the pressure accumulating container 78 reaches the pressure Pb at a point of Td, the intake pressure does not smoothly increase to the target supercharging pressure Pta to undesirably generate irregular acceleration of a vehicle. From this respect also, as described above, it should be understood that it is effective to delay the operation assist timing by an amount of the predetermined delay time sc.

Next, they will be explained with reference to Fig. 5B. When it is determined at a point of Ta (same as a point of Ta in Fig. 5A) that the acceleration requirement is made, time sd corresponding to the fourth-speed change gear range is obtained and set as the delay time. The time sd corresponds to time Ta to Tf in Fig. 5B. In addition, after the time sd elapses from a point where the acceleration requirement is made, the flow amount control valve 80 is controlled to be opened. Then, The pressure in the pressure accumulating container 78 is, as shown in a heavy line in Fig. 5B, supplied to a point of Th to be reduced to a pressure Pd which is, for example, 200kPa. The time Tf to Th (> time Tc to Te in Fig. 5A) in which the pressure in the pressure accumulating container 78 reaches the pressure Pd is a supply time of the pressure to the fourth-speed change gear range. With this pressure supply, the intake pressure is smoothly increased to a target supercharging pressure Ptb.

On the other hand, in regard to a case where the flow amount control valve 80 is controlled to be opened at a point of Tb (same as a point of Tb in Fig. 5A) immediately after the acceleration requirement is made they are shown in a thin line in Fig. 5B. In this case, for smoothly increasing the intake pressure to the target supercharging pressure Ptb, the pressure supply is required until the pressure in the pressure accumulating container 78 substantially reaches a pressure Pe (< Pd) at a point of Th, and a consumption amount of pressures used for the operation assist of the turbocharger 58 becomes large. However, for the event that the pressure consumption amount becomes large, the time until the intake pressure reaches the target supercharging pressure Ptb does not differ largely. From the above, as shown in a heavy line in Fig. 5B, it is found out that the pressure consumption amount is smaller and the intake pressure can be more appropriately increased to the target supercharging pressure in a case where the flow amount control valve 80 is controlled to be opened to perform the operation assist after the optimal predetermined delay time sd elapses from a point where the acceleration requirement is made.

Fig. 5B further shows them in a chain line in the event that the flow amount control valve 80 is controlled to be closed when the pressure in the pressure accumulating container 78 reaches the pressure Pd in a case where the flow amount control valve 80 is controlled to be opened at a point of Tb. In this case, since the pressure in the pressure accumulating container 78 reaches the pressure Pd at a point of Tg, the intake pressure does not smoothly increase to the target supercharging pressure Ptb. From this respect also, as described above, it should be understood that it is effective to delay the operation assist timing by an amount of the predetermined delay time sd.

As apparent from comparison of both of Figs. 5A and 5B, as the change gear ratio is higher, shorter delay time is set and the pressure supply is performed based upon this setting during the predetermined time. Therefore, as the change gear ratio is higher, the target supercharging pressure can be realized more early. That is, as the change gear ratio of the manual transmission 96 at the time the acceleration requirement is made is higher, the delay time which is the time for restricting the pressure supply from the pressure accumulating container 78 is shortened. In consequence, it is possible to appropriately realize the acceleration of the vehicle or the internal combustion engine 10 in accordance with the acceleration requirement level of a driver shown in the change gear ratio.

Next, a third embodiment of the present invention will be explained. The third embodiment differs from the second embodiment in a point of a determination criterion in the acceleration requirement level, but the other construction and control are approximately the same as those in the second embodiment. Therefore, in the flowing explanation of the third embodiment, the determination criterion of the acceleration requirement level and the effect based upon the determination criterion will be explained and the other explanation thereof is omitted.

In the third embodiment, an acceleration requirement level is determined based upon an open speed of an accelerator opening. Here, as an open speed of the accelerator opening is higher at the time the acceleration requirement is made, it is determined that the acceleration requirement level is higher. In addition, data defined by an experiment are in advance stored in the memory device such as the ROM so that as the acceleration requirement level is higher, shorter time is set as the delay time. In addition, the third embodiment differs from the first and second embodiments in a point that the acceleration determination is made (positive determination at step S307 in Fig. 3) not only when the open speed of the accelerator opening exceeds a predetermined value, but also even if the open speed of the accelerator opening does not exceed the predetermined value, when the accelerator opening exceeds a predetermined value, such as 50%.

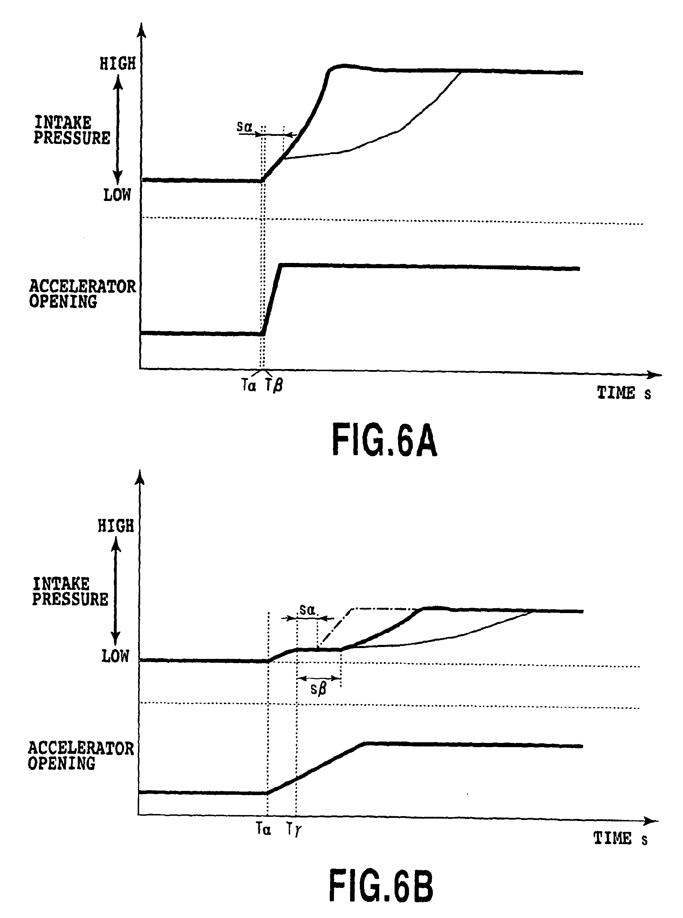

Pressure use in the third embodiment will be explained with reference to Fig. 6A and Fig. 6B. Each of Figs. 6A and 6B conceptually shows the experiment result in regard to a change of an accelerator opening and a change of an intake pressure, that is, a supercharging pressure on the same time line. At a point in the left end of a graph in each of Figs. 6A and 6B, a pressure in the pressure accumulating container 78 has a gauge pressure of 400kPa, and the internal combustion engine 10 operates in a state where the engine rotation number is low (for example, 2000rpm or less) and the engine load is low.

In a case in Fig. 6A, the accelerator pedal 120 starts to be rapidly depressed at a point of Tα, and it is determined that the acceleration is made by determining that an open speed of the accelerator opening exceeds a predetermined value at a point of Tβ immediately after Tα (corresponding to the positive determination at step S307 in Fig. 3). At this time, by searching for data based upon the open speed of the accelerator opening, a delay time sα is derived and set. When the flow amount control valve 80 is controlled to be opened after an elapse of the delay time sα, the pressure in the pressure accumulating container 78 is supplied to the turbine wheel 48 in the turbine 50. In consequence, since the rising speed of the turbine rotation number is increased, the supercharging pressure smoothly and quickly rises to the target supercharging pressure (refer to a heavy line in Fig. 6A). On the other hand, in a case where the pressure in the pressure accumulating container 78 is not supplied to the turbine wheel 48 in the turbine 50, the supercharging pressure does not quickly rise as shown in a thin line in Fig. 6A.

On the other hand, in a case in Fig. 6B, the accelerator pedal 120 starts to be depressed at a point of Tα, and it is determined that the acceleration is made by determining that the open speed of the accelerator opening does not exceed a predetermined value at a point of Tγ, but the accelerator opening exceeds a predetermined value (positive determination at step S307 in Fig. 3). At this time, by searching for data based upon the open speed of the accelerator opening, a delay time sβ (> time sα) is derived and set. When the flow amount control valve 80 is controlled to be opened after an elapse of the delay time sβ, the pressure in the pressure accumulating container 78 is supplied to the exhaust passage Q upstream of the turbine wheel 48. This pressure supply is performed longer than in a case in Fig. 6A. Further, an opening of the flow amount control valve 80 in this case is restricted to 50% to restrict a rapid increase of the turbine rotation number. In consequence, the supercharging pressure smoothly rises to the target supercharging pressure (refer to a heavy line in Fig. 6B). On the other hand, in a case where the pressure in the pressure accumulating container 78 is not supplied, the supercharging pressure rises as shown in a thin line in Fig. 6B.

In addition, Fig. 6B shows a change in intake pressure in a chain line when the flow amount control valve 80 is controlled to be fully opened after an elapse of the delay time sα derived and set in a case in Fig. 6A. In this case, the intake pressure results in rapidly rising, possibly producing rapid acceleration in a vehicle. This is not preferable because there occurs an accelerating feeling different from the acceleration desired by a driver.

As described above, the first to third embodiments in the present invention are explained, but the present invention is not limited to these embodiments. In the above three embodiments, when the acceleration requirement is made (a point where it is determined that the acceleration requirement is made), the open start timing of the flow amount control valve 80 is delayed in such a manner as to restrict the pressure supply from the pressure accumulating container 78 from a point where the acceleration requirement is made to a point where a predetermined delay time elapses. However, during this delay time, the flow amount control valve 80 is opened, but the opening may be restricted to provide a slight opening, such as 10% opening. In this way, it is further possible to restrict that a large pressure fluctuation occurs in the exhaust passage Q upstream of the turbine wheel 48 due to fully opening the flow amount control valve 80 after an elapse of the delay time.

In each of the first to third embodiments, the delay time is derived and set based upon one or more of a closing time until the angle of the vanes 62 reaches (is controlled to) a predetermined angle in a closing side, a closing time until the opening of the EGR valve 42 reaches (is controlled to) a predetermined opening in a closing side, a pressure change in the exhaust passage Q upstream of the turbine wheel 48, a change gear ratio of the transmission, and an open speed of the accelerator opening. In the present invention, it is allowable to set the delay time which is the predetermined time by one or any combination of the above elements. Further, the present invention, for setting the delay time, may adopt an engine operating condition or a vehicle speed at the time the acceleration requirement is made or the like in addition to or instead of the above elements. In addition, in the present invention, the supply time of pressure from the pressure accumulating container 78 after an elapse of the delay time is also not limited to the above three embodiments, and in the same way as the delay time, may be derived and set based upon one or any combination of a pressure change in the exhaust passage Q upstream of the turbine wheel 48, a change gear ratio of the transmission, and an open speed of the accelerator opening, an engine operating condition, a vehicle speed and the like.

In addition, in the first to third embodiments, the transmission is the manual transmission 96, but may be an automatic transmission, whether stepped or stepless. In a case where the transmission is a stepped automatic transmission, the acceleration requirement level at the time the acceleration requirement is made is determined based upon a change gear ratio of the change gear range at this point, and a restriction level of the pressure supply from the pressure accumulating container 78, more specially a length of the delay time is set based upon the determined change gear ratio. In a case where the transmission is a stepless automatic transmission, the acceleration requirement level at the time the acceleration requirement is made is determined, for example, based upon a change gear ratio found from a rotational speed of an input shaft and a rotational speed of an output shaft of the transmission at this time, and a restriction level of the pressure supply from the pressure accumulating container 78 is set based upon the determined change gear ratio.

In addition, in each above-mentioned embodiment, each of the actuators 46 and 66 is a vacuum type actuator, but may be an actuator of a type other than the vacuum type actuator. For example, each of the actuators 46 and 66 may be composed of an electric motor. In addition, the actuator 82 is also not limited to the actuator composed of the electric motor, but may be a vacuum type actuator constructed to include a diaphragm. In addition, the other actuator is also not limited to the above embodiments, but may be various types of actuators.

In addition, in the above three embodiments, the exhaust throttle valve 70 is the butterfly type valve, but may be a valve of a type other than it. The exhaust throttle valve 70 may be, for example, a poppet type valve or a shutter type valve. Incidentally, a valve provided for an exhaust brake may be used as the exhaust throttle valve 70. In addition, the EGR valve 42 or the flow amount control valve 80 may be a valve of a type other than the poppet type valve, and may be a butterfly type valve or a shutter type valve. In addition, the passage for pressure collection connecting the exhaust passage 28 to the pressure accumulating container 78 may be separated from the passage for pressure release connecting the various functional components to the pressure accumulating container 78. In a case where the passage for pressure collection is separated from the passage for pressure release, a valve provided in the passage for pressure collection may be a one-way valve.

In addition, in the above three embodiments, the single pressure accumulating container 78 is provided, but plural pressure accumulating containers may be provided. In a case where two or more pressure accumulating containers 78 are provided, the pressure accumulating containers 78 may be arranged to be dispersed in a vehicle.

In addition, in the above three embodiments, the exhaust gas, that is, the pressure thereof collected in the pressure accumulating container 78 during fuel-cutting is supplied to the turbine wheel of the turbine in the turbocharger, but the gas stored in the pressure accumulating container is not limited to such a gas. For example, a pressure of the exhaust gas from the exhaust passage may be collected and accumulated in the pressure accumulating container at the time the fuel cut is not executed, which may be supplied to the turbocharger. Further, air pressurized by a drive of the compressor may be accumulated in the pressure-accumulated container. The pressure in the pressure accumulating container thus accumulated may be supplied to the turbocharger. In this case, an air compressor and a pressure introducing (collecting) valve may be provided as a pressure supply device to the pressure accumulating container, and the air compressor may be driven using a rotational force of a crank shaft.

In addition, in the above three embodiments, the pressure in the pressure accumulating container is supplied to the exhaust passage upstream of the turbine 50, but if the pressure in the pressure accumulating container is supplied for assisting rotational drive of the turbine wheel in the turbine, the pressure may be supplied to the other location. For example, a passage may be communicated with a turbine housing in the turbine 50 to be capable of directly supplying the pressure in the pressure accumulating container thereto. More preferably, for more effectively supplying a pressure to the turbine wheel, a nozzle for increasing the pressure may be provided at the most downstream side of a passage enabling the pressure supply from the pressure accumulating container.

In addition, in the above three embodiments, the present invention which is applied to a diesel engine is explained, but is not limited thereto, and may be applied to various types of internal combustion engines such as a port injection type gasoline engine or an in-cylinder injection type gasoline engine. In addition, fuel in use is not limited to light oil or gasoline, but may be alcohol fuel, LPG (liquid natural gas) or the like. The cylinder number or the like of the internal combustion engine to which the present invention is applied may not be limited.

## Claims

1. An internal combustion engine with a turbocharger (58) including a turbine (50) having a turbine wheel (48) provided in an exhaust passage (28), a control valve (80) provided to enable supply of pressure in a pressure accumulating container (78) before the turbine wheel (48), and control-valve controlling means (82) for controlling and opening the control valve (80) to supply the pressure in the pressure accumulating container (78) before the turbine wheel (48) for assisting a rotational drive of the turbine wheel (48) at accelerating comprising:
acceleration requirement determining means (122, 110) for determining presence/absence of an acceleration requirement;
said internal combustion engine being **characterized in that** it further comprises restricting means (110) for controlling the control-valve controlling means (82) in such a manner as to restrict an opening of the control valve (80) to restrict the pressure supply from the pressure accumulating container (78) before the turbine wheel (48) from a point where it is determined by the acceleration requirement determining means (122, 110) that the acceleration requirement is made to a point where a predetermined time elapses.

2. An internal combustion engine with a turbocharger according to claim 1, wherein:
the turbocharger (58) is provided with variable nozzle vanes (62); disposed in an exhaust inlet of the turbine (50) and an angle control mechanism (64, 65, 66, 110) for controlling an angle of the variable nozzle vanes (62);
the angle control mechanism (64, 65, 66, 110) controls the angle of the variable nozzle vanes (62) in a closing side when the acceleration requirement determining means (122, 110) determines that the acceleration requirement is made; and
the restricting means (110) controls the control valve-controlling means (82) in such a manner as to restrict the opening of the control valve (80) from a point where the acceleration requirement determining means (122, 110) determines that the acceleration requirement is made to a point where the angle control mechanism (64, 65, 66, 110) controls the angle of the variable nozzle vanes (62) to a predetermined angle in the closing side.

3. An internal combustion engine with a turbocharger according to claim 1 or 2, further comprising:
an EGR device (36) which includes an EGR valve (42) disposed in an EGR passage (38) communicating the exhaust passage (28) with an intake passage (16) and EGR-valve controlling means (46, 110) for controlling an opening of the EGR valve (42), wherein:
the EGR-valve controlling means (46, 110) controls the EGR valve (42) in a valve-closing side when the acceleration requirement determining means (122, 110) determines that the acceleration requirement is made; and
the restricting means (110) controls the control-valve controlling means (82) in such a manner as to restrict the opening of the control valve (80) from a point where the acceleration requirement determining means (122, 110) determines that the acceleration requirement is made to a point where the EGR-valve controlling means (46, 110) controls the opening of the EGR valve (42) to a predetermined opening in the valve-closing side.

4. An internal combustion engine with a turbocharger according to any of claims 1 to 3, wherein:
the restricting means (110) comprises acceleration requirement level determining means for determining an acceleration requirement level and restriction level setting means for setting a restriction level of the pressure supply from the pressure accumulating container (78) before the turbine wheel (48) to be lower as the acceleration requirement level determined by the acceleration requirement level determining means is higher.

5. An internal combustion engine with a turbocharger according to claim 4, wherein:
the restriction level setting means sets shorter time as the predetermined time as the acceleration requirement level determined by the acceleration requirement level determining means is higher.

6. An internal combustion engine with a turbocharger according to claim 4 or 5, wherein:
the restriction level setting means reduces a restriction amount of the opening of the control valve (80) by the control-valve controlling means (82) to be smaller as the acceleration requirement level determined by the acceleration requirement level determining means is higher.

7. An internal combustion engine with a turbocharger according to any of claims 4 to 6, wherein:
the internal combustion engine (10) is mounted on a vehicle (1) and connected through at least a transmission (96) to a drive wheel (88) where as a change gear ratio of the transmission (96) is higher, the acceleration requirement level is higher.

8. An internal combustion engine with a turbocharger according to any of claims 4 to 7, further comprising:
open speed detecting means (122) of an accelerator opening for detecting or estimating an open speed of an accelerator opening, wherein:
as the open speed of the accelerator opening detected or estimated by the open speed detecting means (122) of the accelerator opening is faster, the acceleration requirement level is higher.

9. An internal combustion engine with a turbocharger according to any of claims 1 to 8, wherein:
an event that the restricting means (110) controls the control-valve controlling means (82) in such a manner as to restrict the opening of the control valve (80) includes an event that the valve opening control of the control valve (80) by the control-valve controlling means (82) is delayed.

10. An internal combustion engine with a turbocharger according to any of claims 1 to 9, further comprising:
an exhaust throttle valve (70) disposed in the exhaust passage (28) for the internal combustion engine (10); and
exhaust throttle valve controlling means (72) for controlling and closing the exhaust throttle valve (70) to perform pressure collection from an exhaust passage (28) upstream of the exhaust throttle valve (70) to the pressure accumulating container (78), wherein:
the pressure accumulating container (78) is disposed to be capable of being communicated through a valve with the exhaust passage (28) upstream of the exhaust throttle valve (70).

## Patentansprüche

1. Verbrennungskraftmaschine mit einem Turbolader (58), umfassend eine Turbine (50) mit einem Turbinenrad (48), das in einem Abgaskanal (28) vorgesehen ist, ein Steuerventil (80), das zum Ermöglichten einer Zufuhr eines Drucks in einem Druckspeicherbehälter (78) vor dem Turbinenrad (48) vorgesehen ist, und ein Steuerventil-Steuermittel (82) zum Steuern und Öffnen des Steuerventils (80) zum Zuführen des Drucks in dem Druckspeicherbehälter (78) vor dem Turbinenrad (48) zum Unterstützen eines Drehantriebs des Turbinenrads (48) beim Beschleunigen, umfassend:
ein Beschleunigungsbedarf-Bestimmungsmittel (122, 110) zum Feststellen des Vorhandenseins/Fehlens eines Beschleunigungsbedarfs,
wobei die Verbrennungskraftmaschine **dadurch gekennzeichnet ist, daß** sie außerdem ein Drosselmittel (110) zum Steuern des Steuerventil-Steuermittels (82) in einer solchen Weise umfaßt, daß eine Öffnung des Steuerventils (80) gedrosselt wird, um die Druckzufuhr von dem Druckspeicherbehälter (78) vor dem Turbinenrad (48) von einem Punkt aus zu drosseln, an dem das Beschleunigungsbedarf-Bestimmungsmittel (122, 110) feststellt, daß der Beschleunigungsbedarf bis zu einem Zeitpunkt besteht, an dem eine vorgegebene Zeit abläuft.

2. Verbrennungskraftmaschine mit einem Turbolader nach Anspruch 1, wobei:
der Turbolader (58) mit verstellbaren Leitschaufeln (62), die in einem Abgaseinlaß der Turbine (50) angeordnet sind, und einem Winkelsteuermechanismus (64, 65, 66, 110) zum Steuern eines Winkels der verstellbaren Leitschaufeln (62) versehen ist,
der Winkelsteuermechanismus (64, 65, 66, 110) den Winkel der verstellbaren Leitschaufeln (62) auf einer Schließseite steuert, wenn das Beschleunigungsbedarf-Bestimmungsmittel (122, 110) feststellt, daß der Beschleunigungsbedarf besteht, und
das Drosselmittel (110) das Steuerventil-Steuermittel (82) in einer solchen Weise steuert, daß die Öffnung des Steuerventils (80) von einem Zeitpunkt an gedrosselt wird, an dem das Beschleunigungsbedarf-Bestimmungsmittel (122, 110) feststellt, daß der Beschleunigungsbedarf bis zu einem Zeitpunkt besteht, an dem der Winkelsteuermechanismus (64, 65, 66, 110) den Winkel der verstellbaren Leitschaufeln (62) auf einen vorgegebenen Winkel auf der Schließseite steuert.

3. Verbrennungskraftmaschine mit einem Turbolader nach Anspruch 1 oder 2, außerdem umfassend:
eine AGR-Vorrichtung (36), die ein AGR-Ventil (42), das in einem AGR-Kanal (38) angeordnet ist, der den Abgaskanal (28) mit einem Ansaugkanal (16) verbindet, und ein AGR-Ventilsteuermittel (46, 110) zum Steuern einer Öffnung des AGR-Ventils (42) umfaßt, wobei
das AGR-Ventilsteuermittel (46, 110) das AGR-Ventil (42) in eine Ventilschließseite steuert, wenn das Beschleunigungsbedarf-Bestimmungsmittel (122, 110) feststellt, daß der Beschleunigungsbedarf besteht, und
das Drosselmittel (110) das Steuerventil-Steuermittel (82) in einer solchen Weise steuert, daß die Öffnung des Steuerventils (80) von einem Zeitpunkt an gedrosselt wird, an dem das Beschleunigungsbedarf-Bestimmungsmittel (122, 110) feststellt, daß der Beschleunigungsbedarf bis zu einem Zeitpunkt besteht, an dem das AGR-Ventilsteuermittel (46, 110) den Öffnungsgrad des AGR-Ventils (42) auf eine vorgegebene Öffnung auf der Ventilschließseite steuert.

4. Verbrennungskraftmaschine mit einem Turbolader nach einem der Ansprüche 1 bis 3, wobei:
das Drosselmittel (110) ein Bestimmungsmittel für den Grad des Beschleunigungsbedarfs zum Bestimmen eines Grads des Beschleunigungsbedarfs und ein Drosselgrad-Einstellmittel zum Einstellen eines Drosselgrads für die Druckzufuhr von dem Druckspeicherbehälter (78) vor dem Turbinenrad (48) auf einen niedrigeren Grad umfaßt, wenn der Grad des von dem Bestimmungsmittel für den Grad des Beschleunigungsbedarfs bestimmten Beschleunigungsbedarfs höher ist.

5. Verbrennungskraftmaschine mit einem Turbolader nach Anspruch 4, wobei:
das Drosselgrad-Einstellmittel eine kürzere Zeit als die vorgegebene Zeit einstellt, wenn der von dem Bestimmungsmittel für den Grad des Beschleunigungsbedarfs bestimmte Grad des Beschleunigungsbedarfs höher ist.

6. Verbrennungskraftmaschine mit einem Turbolader nach Anspruch 4 oder 5, wobei:
das Drosselgrad-Einstellmittel einen Drosselbetrag der Öffnung des Steuerventils (80) durch das Steuerventil-Steuermittel (82) auf einen kleineren Wert vermindert, wenn der von dem Bestimmungsmittel für den Grad des Beschleunigungsbedarfs bestimmte Grad des Beschleunigungsbedarfs höher ist.

7. Verbrennungskraftmaschine mit einem Turbolader nach einem der Ansprüche 4 bis 6, wobei:
die Verbrennungskraftmaschine (10) in einem Fahrzeug (1) befestigt ist und durch mindestens ein Getriebe (96) mit einem Antriebsrad (88) verbunden ist, wobei dann, wenn ein Wechselräderverhältnis des Getriebes (96) höher ist, der Grad des Beschleunigungsbedarfs höher ist.

8. Verbrennungskraftmaschine mit einem Turbolader nach einem der Ansprüche 4 bis 7, außerdem umfassend:
ein Detektierungsmittel (122) für die Öffnungsgeschwindigkeit einer Gaspedalöffnung zum Erfassen oder Schätzen einer Öffnungsgeschwindigkeit einer Gaspedalöffnung, wobei:
dann, wenn die von dem Detektierungsmittel (122) für die Öffnungsgeschwindigkeit der Gaspedalöffnung erfaßte oder geschätzte Öffnungsgeschwindigkeit schneller ist, der Grad des Beschleunigungsbedarfs höher ist.

9. Verbrennungskraftmaschine mit einem Turbolader nach einem der Ansprüche 1 bis 8, wobei:
der Fall, in dem das Drosselmittel (110 das Steuerventil-Steuermittel (82) in einer solchen Weise steuert, daß die Öffnung des Steuermittels (80) gedrosselt wird, einen Fall umfaßt, in dem die Steuerung der Öffnung des Steuerventils (80) durch das Steuerventil-Steuermittel (82) verzögert wird.

10. Verbrennungskraftmaschine mit einem Turbolader nach einem der Ansprüche 1 bis 9, außerdem umfassend:
ein Abgasdrosselventil (70), das in dem Abgaskanal (28) für die Verbrennungskraftmaschine (10) angeordnet ist, und
ein Steuermittel (72) für das Abgasdrosselventil zum Steuern und Schließen des Abgasdrosselventils (70), um eine Druckspeicherung von einem Abgaskanal (28) stromauf des Abgasdrosselschiebers (70) zu dem Druckspeicherbehälter (78) durchzuführen, wobei:
der Druckspeicherbehälter (78) so angeordnet ist, daß er über ein Ventil mit dem Abgaskanal (28) stromauf des Abgasdrosselventils (70) verbunden werden kann.

## Revendications

1. Moteur à combustion interne avec un turbocompresseur (58) comprenant une turbine (50) ayant une roue de turbine (48) prévue dans un passage d'échappement (28), une soupape de commande (80) prévue pour permettre l'alimentation de pression dans un récipient d'accumulation de pression (78) avant la roue de turbine (48), et des moyens de contrôle de soupape de commande (82) pour contrôler et ouvrir la soupape de commande (80) afin d'amener la pression dans le récipient d'accumulation de pression (78) avant la roue de turbine (48) pour assister un entraînement rotatif de la roue de turbine (48) à l'accélération, comprenant :
des moyens de détermination de demande d'accélération (122, 110) pour déterminer la présence/absence d'une demande d'accélération ;
ledit moteur à combustion interne étant **caractérisé en ce qu'**il comprend en outré :
des moyens de restriction (110) pour contrôler les moyens de contrôle de soupape de commande (82) pour limiter une ouverture de la soupape de commande (80) afin de limiter l'alimentation de pression provenant du récipient d'accumulation de pression (78) avant la roue de turbine (48) à partir d'un point où l'on détermine grâce aux moyens de détermination de demande d'accélération (122, 110) que la demande d'accélération est faite à un point où un temps prédéterminé s'est écoulé.

2. Moteur à combustion interne avec un turbocompresseur selon la revendication 1, dans lequel :
le turbocompresseur (58) est prévu avec des aubes de distributeur variables (62) disposées dans une entrée d'échappement de la turbine (50) et un mécanisme de contrôle d'angle (64, 65, 66, 110) pour contrôler un angle des aubes de distributeur variables (62) ;
le mécanisme de contrôle d'angle (64, 65, 66, 110) contrôle l'angle des aubes de distributeur variables (62) dans un côté de fermeture lorsque les moyens de détermination de demande d'accélération (122, 110) déterminent que la demande d'accélération est faite ; et
les moyens de restriction (110) contrôlent les moyens de contrôle de soupape de commande (82) afin de limiter l'ouverture de la soupape de commande (80) à partir d'un point où les moyens de détermination de demande d'accélération (122, 110) déterminent que la demande d'accélération est faite à un point où le mécanisme de contrôle d'angle (64, 65, 66, 110) contrôle l'angle des aubes de distributeur variables (62) selon un angle prédéterminé du côté de la fermeture.

3. Moteur à combustion interne avec un turbocompresseur selon la revendication 1 ou 2, comprenant en outré :
un dispositif EGR (36) qui comprend une soupape EGR (42) disposée dans un passage EGR (38) faisant communiquer le passage d'échappement (28) avec un passage d`admission (16) et des moyens de contrôle de soupape EGR (46, 110) pour contrôler une ouverture de la soupape EGR (42), dans lequel :
les moyens de contrôle de soupape EGR (46, 110) contrôlent la soupape EGR (42) du côté de la fermeture de la soupape lorsque les moyens de détermination de demande d'accélération (122, 110) déterminent que la demande d'accélération est faite ; et
les moyens de restriction (110) contrôlent les moyens de contrôle de soupape de commande (82) afin de limiter l'ouverture de la soupape de commande (80) à partir d'un point où les moyens de détermination de demande d'accélération (122, 110) déterminent que la demande d'accélération est faite à un point où les moyens de contrôle de soupape EGR (46, 110) contrôlent l'ouverture de la soupape EGR (42) selon une ouverture prédéterminée du côté de fermeture de la soupape.

4. Moteur à combustion interne avec un turbocompresseur selon l'une quelconque des revendications 1 à 3, dans lequel :
les moyens de restriction (110) comprennent des moyens de détermination de niveau de demande d'accélération pour déterminer un niveau de demande d'accélération et des moyens de réglage de niveau de restriction pour régler un niveau de restriction de l'alimentation de pression à partir du récipient d'accumulation de pression (78) avant la roue de turbine (48) destiné à être inférieur lorsque le niveau de demande d'accélération déterminé par les moyens de détermination de niveau de demande d'accélération est plus élevé.

5. Moteur à combustion interne avec un turbocompresseur selon la revendication 4, dans lequel :
les moyens de réglage de niveau de restriction règlent un temps plus court comme temps prédéterminé lorsque le niveau de demande d'accélération déterminé par les moyens de détermination de niveau de demande d'accélération est plus important.

6. Moteur à combustion interne avec un turbocompresseur selon la revendication 4 ou 5, dans lequel :
les moyens de réglage de niveau de restriction réduisent une quantité de restriction de l'ouverture de la soupape de commande (80) par les moyens de contrôle de soupape de commande (82) pour qu'elle soit inférieure lorsque le niveau de demande d'accélération déterminé par les moyens de détermination de niveau de demande d'accélération est plus élevé.

7. Moteur à combustion interne avec un turbocompresseur selon l'une quelconque des revendications 4 à 6, dans lequel :
le moteur à combustion interne (10) est monté sur un véhicule (1) et raccordé par le biais d'au moins une transmission (96) à une roue d'entraînement (88) où lorsqu'un rapport de changement de vitesse de la transmission (96) est plus élevé, le niveau de demande d'accélération est plus élevé.

8. Moteur à combustion interne avec un turbocompresseur selon l'une quelconque des revendications 4 à 7, comprenant en outré :
des moyens de détection de vitesse ouverte (122) d'une ouverture d'accélérateur pour détecter ou estimer une vitesse ouverte de l'ouverture d'accélérateur, dans lequel :
lorsque la vitesse ouverte de l'ouverture d'accélérateur détectée ou estimée par les moyens de détection de vitesse ouverte (122) de l'ouverture d'accélérateur est plus rapide, le niveau de demande d'accélération est plus important.

9. Moteur à combustion interne avec un turbocompresseur selon l'une quelconque des revendications 1 à 8, dans lequel :
un événement qui réside dans le fait que les moyens de restriction (110) contrôlent les moyens de contrôle de soupape de commande (82) afin de limiter l'ouverture de la soupape de commande (80) comprend un événement qui réside dans le fait que le contrôle d'ouverture de soupape de la soupape de commande (80) par les moyens de contrôle de soupape de commande (82) est retardé.

10. Moteur à combustion interne avec un seul selon l'une quelconque des revendications 1 à 9, comprenant en outré :
une soupape d'échappement à papillon (70) disposée dans le passage d'échappement (28) pour le moteur à combustion interne (10) ; et
des moyens de contrôle de soupape d'échappement à papillon (72) pour contrôler et fermer la soupape d'échappement à papillon (70) afin de réaliser une collecte de pression à partir d'un passage d'échappement (28) en amont de la soupape d'échappement à papillon (70) jusqu'au récipient d'accumulation de pression (78), dans lequel :
le récipient d'accumulation de pression (78) est disposé pour pouvoir communiquer par le biais d'une soupape avec le passage d'échappement (28) en amont de la soupape d'échappement à papillon(70).
